# EUROPEAN PATENT APPLICATION

(11) **EP 4 808 170 A1**
(43) Date of publication of application: **16.09.2026**
(21) Application number: 24896425.6
(22) Date of filing: 22.11.2024
(51) Int. Cl.: H04W 4/38

(54) **COMMUNICATION METHOD AND APPARATUS**

(30) Priority: 30.11.2023 CN 202311636127
(71) Applicant: Huawei Technologies Co., Ltd., Shenzhen, Guangdong 518129 (CN)
(72) Inventor: YING, Jiangwei, Shenzhen, Guangdong 518129 (CN); CHEN, Lei, Shenzhen, Guangdong 518129 (CN); WU, Wenbin, Shenzhen, Guangdong 518129 (CN); WANG, Zhonglong, Shenzhen, Guangdong 518129 (CN)
(74) Representative: Maiwald GmbH
(86) International application number: PCT/CN2024/133742
(87) International publication number: WO 2025/113334

(57) **Abstract**

Embodiments of this application provide a communication method and apparatus. This method may be applied to a sensing function network element. The method includes: The sensing function network element determines a sensing data type based on sensing information, and sends, to a first sensing device, information indicating the sensing data type. The sensing function network element receives sensing data of the sensing data type from the first sensing device. In this method, the sensing function network element obtains the sensing data of the sensing data type indicated to the first sensing device. This can improve sensing efficiency. In addition, the sensing data type is determined by the sensing function network element based on the sensing information, so that the sensing data received by the sensing function network element can match a differentiated requirement of the sensing information.

## Description

This application claims priority to Chinese Patent Application No. 202311636127.8, filed with the China National Intellectual Property Administration on November 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

When a network device or a terminal device has a sensing capability brought by a radio band (for example, a millimeter-wave band or a terahertz band), a wireless communication system may perform sensing and recognition for a specific area/object/event/environment.

A core network device selects a suitable sensing device (for example, a base station and/or a terminal device) based on a sensing service request of a service requester, and sends sensing control information to the selected sensing device. The selected sensing device performs a sensing service based on the sensing control information, to obtain sensing data, and reports the sensing data to the core network device. Therefore, the core network device may expose, to the service requester, a sensing result generated based on the sensing data, and the service requester uses the sensing result in a related application.

How the sensing device reports the sensing data to the core network device is a problem that needs to be resolved.

### SUMMARY

Embodiments of this application provide a communication method and apparatus, to improve sensing efficiency.

According to a first aspect, an embodiment of this application provides a communication method. The method may be performed by a sensing function network element. The sensing function network element herein may refer to the sensing function network element, or may refer to a processor, a module, a chip, a chip system, or the like that implements the method in the sensing function network element. In this method, the sensing function network element determines a sensing data type based on sensing information, and sends, to a first sensing device, information indicating the sensing data type. The sensing function network element receives sensing data of the sensing data type from the first sensing device.

In this embodiment of this application, the sensing function network element sends the sensing data type to the first sensing device. This helps the first sensing device send the sensing data of the sensing data type to the sensing function network element. This can improve sensing efficiency. In addition, the sensing data type is determined by the sensing function network element based on the sensing information, so that the sensing data received by the sensing function network element can match a differentiated requirement of the sensing information.

In an optional implementation, the sensing information includes at least one of the following: a sensing service type, a sensing principle, a sensing performance indicator requirement, a data fusion effect indicator requirement, a security and privacy requirement, an operator policy, a sensing mode, a sensing device type, a sensing data type supported by a sensing device, or a processing capability of the service requester. In this manner, the sensing function network element can determine the sensing data type based on differentiated requirements of related information like a sensing service on the sensing data, so that the sensing data obtained by the sensing function network element satisfies a requirement of the sensing service. This can improve the sensing efficiency.

In an optional implementation, that the sensing function network element determines the sensing data type based on the sensing information includes: determining, based on the sensing information and authorization information of the service requester, a first type of a sensing result exposed to the service requester, where the authorization information of the service requester includes a sensing result type authorized to the service requester; and determining the sensing data type based on the first type of the sensing result.

In another optional implementation, that the sensing function network element determines the sensing data type based on the sensing information includes: determining, based on the sensing information, a first type of a sensing result exposed to the service requester; and determining the sensing data type based on the first type of the sensing result.

A manner in which the sensing function network element determines the sensing data type based on the determined first type of the sensing result helps the sensing function network element determine, based on the obtained sensing data, a sensing result that is of the first type of the sensing result and that is exposed to the service requester.

In an optional implementation, the sensing function network element sends, to the service requester, information indicating the first type of the sensing result, so that the service requester learns that the sensing function network element can expose the sensing result of the first type of the sensing result to the service requester.

In an optional implementation, the sensing function network element receives, from the service requester, information indicating a second type of a sensing result. The second type of the sensing result indicates a sensing result requested by the service requester. In this way, that the sensing function network element sends, to the service requester, the information indicating the first type of the sensing result includes: when the second type of the sensing result is different from the first type of the sensing result, sending, to the service requester, the information indicating the first type of the sensing result.

It can be learned that the service requester requests the sensing function network element to expose the sensing result of the second type of the sensing result, and the sensing function network element indicates the first type of the sensing result to the service requester when the second type of the sensing result is different from the first type of the sensing result. In this manner, the service requester can learn that the sensing function network element cannot expose the requested sensing result to the service requester, and can expose the sensing result of the first type of the sensing result.

In an optional implementation, the sensing function network element sends the sensing result of the first type of the sensing result to the service requester based on the sensing data. This manner helps the service requester perform sensing and recognition based on the sensing result.

In an optional implementation, the sensing function network element determines the sensing principle based on the sensing service type and the sensing performance indicator requirement, and sends, to the first sensing device and/or a second sensing device, information indicating the sensing principle. The sensing principle is a radar sensing principle or a non-radar sensing principle. This manner helps the first sensing device and/or the second sensing device perform the sensing service based on the sensing principle indicated by the sensing function network element, and can improve the sensing efficiency.

The radar sensing principle is obtaining object characteristic information or event characteristic information by processing an object-reflected signal received by a receiver. The non-radar sensing principle is: obtaining the object characteristic information or the event characteristic information by measuring a change of radio channel state information; or obtaining the object characteristic information or the event characteristic information by using a camera; or obtaining the object characteristic information or the event characteristic information by using an ultrasonic wave; or obtaining the object characteristic information or the event characteristic information through thermal imaging.

In an optional implementation, the sensing function network element sends, to the second sensing device, information indicating an intermediate data type. The intermediate data type is used by the second sensing device to determine intermediate data to be sent to the first sensing device, and the intermediate data is used by the first sensing device to obtain the sensing data. This manner helps the second sensing device determine the intermediate data of the intermediate data type, and sends the intermediate data to the first sensing device. This helps the first sensing device obtain the sensing data of the sensing data type based on the intermediate data.

In an optional implementation, the sensing data type is one of raw data, spectrum information, point cloud information, non-point cloud information, and a sensing result. The raw data, the spectrum information, the point cloud information, and the sensing result are obtained when the first sensing device or the second sensing device performs sensing by using the radar sensing principle. The non-point cloud information is obtained when the first sensing device or the second sensing device performs sensing by using the non-radar sensing principle.

Specifically, the raw data is obtained by processing a received reflected signal when the first sensing device or the second sensing device performs sensing by using the radar sensing principle; the spectrum information is obtained by processing the obtained raw data when the first sensing device or the second sensing device performs sensing by using the radar sensing principle; the point cloud information is obtained by processing the obtained spectrum information when the first sensing device or the second sensing device performs sensing by using the radar sensing principle; and the sensing result is obtained by processing the obtained point cloud information when the first sensing device or the second sensing device performs sensing by using the radar sensing principle.

When the sensing data type is raw data, spectrum information, or point cloud information, the sensing function network element obtains the sensing data of the sensing data type, so that types of sensing results that are exposed by the sensing function network element to the service requester can be enriched.

In an optional implementation, that the sensing function network element sends, to the first sensing device, the information indicating the sensing data type includes: receiving a sensing service request from the service requester; and sending, to the first sensing device based on the sensing service request, the information indicating the sensing data type. It can be learned that the sensing function network element receives the sensing service request from the service requester, determines the first sensing device based on the sensing service request, and sends, to the first sensing device, the information indicating the sensing data type, so that the first sensing device reports the sensing data of the sensing data type to the sensing function network element.

In an optional implementation, that the sensing function network element sends, to the first sensing device based on the sensing service request, the information indicating the sensing data type includes: determining the first sensing device based on a sensing area in the sensing service request, where the first sensing device is a sensing device in the sensing area; and sending, to the first sensing device, the information indicating the sensing data type. It can be learned that the sensing service request includes the sensing area, and the sensing function network element determines the first sensing device in the sensing area as a sensing device performing the sensing service, to send, to the first sensing device, the information indicating the sensing data type.

In an optional implementation, that the sensing function network element determines the first sensing device based on the sensing area in the sensing service request includes: determining one or more sensing devices based on the sensing area in the sensing service request; and determining the first sensing device based on a sensing data type supported by the one or more sensing devices. The first sensing device supports the sensing data type determined by the sensing function network element.

It can be learned that before sending, to the first sensing device, the information indicating the sensing data type, the sensing function network element determines the one or more sensing devices located in the sensing area, and determines, as the sensing device performing the sensing service, the first sensing device that supports the determined sensing data type and that is in the one or more sensing devices. Therefore, the sensing function network element sends, to the first sensing device, the information indicating the sensing data type, to obtain the sensing data of the sensing data type.

In an optional implementation, the spectrum information or the point cloud information includes at least one of the following: a delay between receiving, by the first sensing device or the second sensing device, a reflected signal from a reflection point and sending a sensing signal by the first sensing device or the second sensing device, strength of the reflected signal, an azimuth angle of arrival of the reflected signal relative to the first sensing device or the second sensing device, a zenith angle of arrival of the reflected signal relative to the first sensing device or the second sensing device, a velocity direction azimuth angle of a sensing object relative to the first sensing device or the second sensing device, a velocity direction elevation angle of the sensing object relative to the first sensing device or the second sensing device, a velocity of the reflection point relative to the first sensing device or the second sensing device, a time stamp of the spectrum information or the point cloud information, or a data source of the spectrum information or the point cloud information.

In another optional implementation, the spectrum information or the point cloud information includes at least one of the following: a distance between a reflection point and the first sensing device or the second sensing device, an azimuth angle of the reflection point relative to the first sensing device or the second sensing device, an elevation angle of the reflection point relative to the first sensing device or the second sensing device, a velocity direction azimuth angle of the reflection point relative to the first sensing device or the second sensing device, a velocity direction elevation angle of the reflection point relative to the first sensing device or the second sensing device, a velocity of the reflection point relative to the first sensing device or the second sensing device, a time stamp of the spectrum information or the point cloud information, or a data source of the spectrum information or the point cloud information.

In still another optional implementation, the spectrum information or the point cloud information includes at least one of the following: coordinates of a reflection point, a velocity direction azimuth angle of the reflection point, a velocity direction elevation angle of the reflection point, a velocity of the reflection point, a time stamp of the spectrum information or the point cloud information, or a data source of the spectrum information or the point cloud information.

In an optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, a distance between the sensing object and the first sensing device or the second sensing device, an azimuth angle of the sensing object relative to the first sensing device or the second sensing device, an elevation angle of the sensing object relative to the first sensing device or the second sensing device, a velocity of the sensing object relative to the first sensing device or the second sensing device, a velocity direction azimuth angle of the sensing object relative to the first sensing device or the second sensing device, a velocity direction elevation angle of the sensing object relative to the first sensing device or the second sensing device, a reflection cross-section of the sensing object, a time stamp of the sensing result, or a data source of the sensing result.

In another optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, coordinates of the sensing object, a velocity direction azimuth angle of the sensing object, a velocity direction elevation angle of the sensing object, a velocity of the sensing object, a reflection cross-section of the sensing object, a time stamp of the sensing result, or a data source of the sensing result.

In an optional implementation, the non-point cloud information includes channel state information corresponding to the sensing area, and the channel state information includes at least one of received power, received quality, channel quality, or a delay of a multipath signal.

According to a second aspect, an embodiment of this application provides a communication method. The method may be performed by a first sensing device. The first sensing device herein may refer to the first sensing device, or may refer to a processor, a module, a chip, a chip system, or the like that implements the method in the first sensing device. In this method, the first sensing device receives, from a sensing function network element, information indicating a sensing data type, and sends sensing data of the sensing data type to the sensing function network element. The sensing data type is determined based on sensing information.

In this embodiment of this application, the first sensing device receives the sensing data type indicated by the sensing function network element, to send the sensing data of the sensing data type to the sensing function network element. This can improve sensing efficiency. In addition, the sensing data type is determined by the sensing function network element based on the sensing information, so that the sensing data received by the sensing function network element can match a differentiated requirement of the sensing information.

In an optional implementation, the sensing information includes at least one of the following: a sensing service type, a sensing principle, a sensing performance indicator requirement, a data fusion effect indicator requirement, a security and privacy requirement, an operator policy, a sensing mode, a sensing device type, a sensing data type supported by a sensing device, or a processing capability of the service requester. This manner helps the sensing function network element determine the sensing data type based on differentiated requirements of related information like a sensing service on the sensing data, so that the obtained sensing data satisfies a requirement of the sensing service. This can improve the sensing efficiency.

In an optional implementation, before sending the sensing data of the sensing data type to the sensing function network element, the first sensing device further performs the following steps: receiving, from the sensing function network element, information indicating the sensing principle, where the sensing principle is a radar sensing principle or a non-radar sensing principle, and the sensing principle is determined based on the sensing service type and the sensing performance indicator requirement; and performing a sensing service based on the sensing principle, to obtain the sensing data of the sensing data type. It can be learned that the first sensing device performs sensing based on the sensing principle indicated by the sensing function network element, and obtains the sensing data of the sensing data type. This can improve the sensing efficiency.

The radar sensing principle is obtaining object characteristic information or event characteristic information by processing an object-reflected signal received by a receiver. The non-radar sensing principle is: obtaining the object characteristic information or the event characteristic information by measuring a change of radio channel state information; or obtaining the object characteristic information or the event characteristic information by using a camera; or obtaining the object characteristic information or the event characteristic information by using an ultrasonic wave; or obtaining the object characteristic information or the event characteristic information through thermal imaging.

In an optional implementation, before sending the sensing data of the sensing data type to the sensing function network element, the first sensing device further performs the following steps: receiving intermediate data of an intermediate data type from a second sensing device; and obtaining the sensing data of the sensing data type based on the intermediate data.

It can be learned that when the first sensing device is not a sensing device that receives a reflected signal, the first sensing device may obtain the sensing data of the sensing data type based on the intermediate data from the second sensing device.

In an optional implementation, the sensing data type is one of raw data, spectrum information, point cloud information, non-point cloud information, and a sensing result. The raw data, the spectrum information, the point cloud information, and the sensing result are obtained when the first sensing device or the second sensing device performs sensing by using the radar sensing principle. The non-point cloud information is obtained when the first sensing device or the second sensing device performs sensing by using the non-radar sensing principle.

Specifically, the raw data is obtained by processing a received reflected signal when the first sensing device or the second sensing device performs sensing by using the radar sensing principle; the spectrum information is obtained by processing the obtained raw data when the first sensing device or the second sensing device performs sensing by using the radar sensing principle; the point cloud information is obtained by processing the obtained spectrum information when the first sensing device or the second sensing device performs sensing by using the radar sensing principle; and the sensing result is obtained by processing the obtained point cloud information when the first sensing device or the second sensing device performs sensing by using the radar sensing principle.

When the sensing data type is raw data, spectrum information, or point cloud information, the sensing function network element obtains the sensing data of the sensing data type. This helps enrich types of sensing results that are exposed by the sensing function network element to the service requester.

In an optional implementation, the spectrum information or the point cloud information includes at least one of the following: a delay between receiving, by the first sensing device or the second sensing device, a reflected signal from a reflection point and sending a sensing signal by the first sensing device or the second sensing device, strength of the reflected signal, an azimuth angle of arrival of the reflected signal relative to the first sensing device or the second sensing device, a zenith angle of arrival of the reflected signal relative to the first sensing device or the second sensing device, a velocity direction azimuth angle of a sensing object relative to the first sensing device or the second sensing device, a velocity direction elevation angle of the sensing object relative to the first sensing device or the second sensing device, a velocity of the reflection point relative to the first sensing device or the second sensing device, a time stamp of the spectrum information or the point cloud information, or a data source of the spectrum information or the point cloud information.

In another optional implementation, the spectrum information or the point cloud information includes at least one of the following: a distance between a reflection point and the first sensing device or the second sensing device, an azimuth angle of the reflection point relative to the first sensing device or the second sensing device, an elevation angle of the reflection point relative to the first sensing device or the second sensing device, a velocity direction azimuth angle of the reflection point relative to the first sensing device or the second sensing device, a velocity direction elevation angle of the reflection point relative to the first sensing device or the second sensing device, a velocity of the reflection point relative to the first sensing device or the second sensing device, a time stamp of the spectrum information or the point cloud information, or a data source of the spectrum information or the point cloud information.

In still another optional implementation, the spectrum information or the point cloud information includes at least one of the following: coordinates of a reflection point, a velocity direction azimuth angle of the reflection point, a velocity direction elevation angle of the reflection point, a velocity of the reflection point, a time stamp of the spectrum information or the point cloud information, or a data source of the spectrum information or the point cloud information.

In an optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, a distance between the sensing object and the first sensing device or the second sensing device, an azimuth angle of the sensing object relative to the first sensing device or the second sensing device, an elevation angle of the sensing object relative to the first sensing device or the second sensing device, a velocity of the sensing object relative to the first sensing device or the second sensing device, a velocity direction azimuth angle of the sensing object relative to the first sensing device or the second sensing device, a velocity direction elevation angle of the sensing object relative to the first sensing device or the second sensing device, a reflection cross-section of the sensing object, a time stamp of the sensing result, or a data source of the sensing result.

In another optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, coordinates of the sensing object, a velocity direction azimuth angle of the sensing object, a velocity direction elevation angle of the sensing object, a velocity of the sensing object, a reflection cross-section of the sensing object, a time stamp of the sensing result, or a data source of the sensing result.

In an optional implementation, the non-point cloud information includes channel state information corresponding to the sensing area, and the channel state information includes at least one of received power, received quality, channel quality, or a delay of a multipath signal.

According to a third aspect, an embodiment of this application provides a communication method. The method may be performed by a second sensing device. The second sensing device herein may refer to the second sensing device, or may refer to a processor, a module, a chip, a chip system, or the like that implements the method in the second sensing device. In this method, the second sensing device receives information indicating an intermediate data type. The intermediate data type is used by the second sensing device to determine intermediate data to be sent to a first sensing device, and the intermediate data is used by the first sensing device to obtain sensing data. The second sensing device sends the intermediate data to the first sensing device. The intermediate data is determined by the second sensing device based on the intermediate data type.

In this embodiment of this application, the second sensing device receives the information indicating the intermediate data type, to send the intermediate data determined based on the intermediate data type to the first sensing device. This helps the first sensing device obtain, based on the intermediate data, the sensing data to be reported to a sensing function network element.

In an optional implementation, that the second sensing device receives the information indicating the intermediate data type includes: receiving, from the sensing function network element or the first sensing device, the information indicating the intermediate data type. It can be learned that the information indicating the intermediate data type may be sent by the sensing function network element to the second sensing device, or may be sent by the first sensing device to the second sensing device.

In an optional implementation, the second sensing device further receives, from the sensing function network element, information indicating a sensing principle. A radar sensing principle is obtaining object characteristic information or event characteristic information by processing an object-reflected signal received by a receiver. A non-radar sensing principle is: obtaining the object characteristic information or the event characteristic information by measuring a change of radio channel state information; or obtaining the object characteristic information or the event characteristic information by using a camera; or obtaining the object characteristic information or the event characteristic information by using an ultrasonic wave; or obtaining the object characteristic information or the event characteristic information through thermal imaging.

In an optional implementation, the intermediate data type is one of raw data, spectrum information, point cloud information, or non-point cloud information. The raw data, the spectrum information, and the point cloud information are obtained when the first sensing device or the second sensing device performs sensing by using the radar sensing principle, and the non-point cloud information is obtained when the first sensing device or the second sensing device performs sensing by using the non-radar sensing principle.

Specifically, the raw data is obtained by processing a received reflected signal when the first sensing device or the second sensing device performs sensing by using the radar sensing principle; the spectrum information is obtained by processing the obtained raw data when the first sensing device or the second sensing device performs sensing by using the radar sensing principle; and the point cloud information is obtained by processing the obtained spectrum information when the first sensing device or the second sensing device performs sensing by using the radar sensing principle.

In an optional implementation, the spectrum information or the point cloud information includes at least one of the following: a delay between receiving, by the first sensing device or the second sensing device, a reflected signal from a reflection point and sending a sensing signal by the first sensing device or the second sensing device, strength of the reflected signal, an azimuth angle of arrival of the reflected signal relative to the first sensing device or the second sensing device, a zenith angle of arrival of the reflected signal relative to the first sensing device or the second sensing device, a velocity direction azimuth angle of a sensing object relative to the first sensing device or the second sensing device, a velocity direction elevation angle of the sensing object relative to the first sensing device or the second sensing device, a velocity of the reflection point relative to the first sensing device or the second sensing device, a time stamp of the spectrum information or the point cloud information, or a data source of the spectrum information or the point cloud information.

In another optional implementation, the spectrum information or the point cloud information includes at least one of the following: a distance between a reflection point and the first sensing device or the second sensing device, an azimuth angle of the reflection point relative to the first sensing device or the second sensing device, an elevation angle of the reflection point relative to the first sensing device or the second sensing device, a velocity direction azimuth angle of the reflection point relative to the first sensing device or the second sensing device, a velocity direction elevation angle of the reflection point relative to the first sensing device or the second sensing device, a velocity of the reflection point relative to the first sensing device or the second sensing device, a time stamp of the spectrum information or the point cloud information, or a data source of the spectrum information or the point cloud information.

In still another optional implementation, the spectrum information or the point cloud information includes at least one of the following: coordinates of a reflection point, a velocity direction azimuth angle of the reflection point, a velocity direction elevation angle of the reflection point, a velocity of the reflection point, a time stamp of the spectrum information or the point cloud information, or a data source of the spectrum information or the point cloud information.

In an optional implementation, the non-point cloud information includes channel state information corresponding to the sensing area, and the channel state information includes at least one of received power, received quality, channel quality, or a delay of a multipath signal.

According to a fourth aspect, an embodiment of this application provides a communication method. The method may be performed by a sensing function network element. The sensing function network element herein may refer to the sensing function network element, or may refer to a processor, a module, a chip, a chip system, or the like that implements the method in the sensing function network element. In this method, the sensing function network element obtains one or more sensing data types supported by a first sensing device, and sends a first indication to the first sensing device. The first indication indicates a first sensing data type determined from the one or more sensing data types. The sensing function network element receives a sensing service request of a first sensing service from a service requester. The sensing function network element sends sensing control information to the first sensing device based on the sensing service request. The sensing control information is used to request the first sensing device to perform the first sensing service. The sensing function network element receives sensing data of the first sensing data type from the first sensing device. The sensing data is obtained by the first sensing device by performing the first sensing service.

In this embodiment of this application, the sensing function network element determines, based on the one or more sensing data types supported by the first sensing device, that a type of the sensing data reported by the first sensing device to the sensing function network element is the first sensing data type, and indicates the first sensing data type to the first sensing device. Therefore, when the sensing function network element determines, based on the sensing service request from the service requester, that the first sensing device is to perform the first sensing service in the sensing service request, the first sensing device is facilitated to perform the first sensing service to obtain the sensing data of the first sensing data type, and send the sensing data of the first sensing data type to the sensing function network element. This can improve sensing efficiency.

In an optional implementation, that the sensing function network element sends the sensing control information to the first sensing device based on the sensing service request includes: determining the first sensing device based on a sensing area in the sensing service request; and sending the sensing control information to the first sensing device. The first sensing device is a sensing device in the sensing area.

In an optional implementation, that the sensing function network element determines the first sensing device based on the sensing area in the sensing service request includes: determining one or more sensing devices based on the sensing area in the sensing service request; and determining the first sensing device based on a sensing data type supported by the one or more sensing devices. The first sensing data type supported by the first sensing device supports the first sensing service.

In an optional implementation, that the first sensing data type supports the first sensing service includes: the first sensing data type satisfies a sensing data type and/or a sensing result type of the first sensing service. The sensing data type and/or the sensing result type of the first sensing service are/is carried in the sensing service request, or the sensing data type and/or the sensing result type of the first sensing service are/is determined based on sensing information in the sensing service request and/or authorization information of the service requester. The authorization information of the service requester includes a sensing result type authorized to the service requester.

It can be learned that the sensing function network element determines the one or more sensing devices located in the sensing area, and determines, as a sensing device performing the first sensing service, the first sensing device whose supported sensing data type satisfies the sensing data type and/or the sensing result type of the first sensing service and that are in the one or more sensing devices, to send the sensing control information to the first sensing device, to request the first sensing device to perform the first sensing service.

In an optional implementation, the sensing information includes at least one of the following: a sensing service type, a sensing principle, a sensing performance indicator requirement, a data fusion effect indicator requirement, a security and privacy requirement, an operator policy, a sensing mode, a sensing device type, a sensing data type supported by a sensing device, or a processing capability of the service requester.

In an optional implementation, the sensing function network element sends, to the service requester, information indicating the sensing result type of the first sensing service. In this manner, the service requester can learn that the sensing function network element can expose, to the service requester, the sensing result of the sensing result type of the first sensing service.

In an optional implementation, the sensing function network element further receives a sensing result type from the service requester. The sensing result type of the service requester indicates a sensing result requested by the service requester. In this way, that the sensing function network element sends, to the service requester, the information indicating the sensing result type of the first sensing service includes: when the sensing result type of the service requester is different from the sensing result type of the first sensing service, sending, to the service requester, the information indicating the sensing result type of the first sensing service.

It can be learned that when the type of the sensing result that the service requester requests to expose is different from the sensing result type of the first sensing service, the sensing function network element indicates the sensing result type of the first sensing service to the service requester. In this manner, the service requester can learn that the sensing function network element cannot expose the requested sensing result to the service requester, and can expose the sensing result of the sensing result type of the first sensing service.

In an optional implementation, the sensing function network element further sends the sensing result of the sensing result type of the first sensing service to the service requester based on the sensing data. This manner helps the service requester perform sensing and recognition based on the sensing result.

In an optional implementation, the sensing function network element further performs the following steps: obtaining one or more sensing principles supported by the first sensing device; and sending a second indication to the first sensing device. The second indication indicates a first sensing principle determined from the one or more sensing principles. This manner helps the first sensing device and/or the second sensing device perform a sensing service based on the first sensing principle indicated by the sensing function network element, and can improve the sensing efficiency.

In an optional implementation, the sensing function network element further sends, to the second sensing device, information indicating an intermediate data type. The intermediate data type is used by the second sensing device to determine intermediate data to be sent to the first sensing device, and the intermediate data is used by the first sensing device to obtain the sensing data of the first sensing data type.

In an optional implementation, the first sensing data type is one of raw data, spectrum information, point cloud information, non-point cloud information, and a sensing result. The raw data, the spectrum information, the point cloud information, and the sensing result are obtained when the first sensing device or the second sensing device performs sensing by using a radar sensing principle. The non-point cloud information is obtained when the first sensing device or the second sensing device performs sensing by using a non-radar sensing principle.

Specifically, the raw data is obtained by processing a received reflected signal when the first sensing device or the second sensing device performs sensing by using the radar sensing principle; the spectrum information is obtained by processing the obtained raw data when the first sensing device or the second sensing device performs sensing by using the radar sensing principle; the point cloud information is obtained by processing the obtained spectrum information when the first sensing device or the second sensing device performs sensing by using the radar sensing principle; and the sensing result is obtained by processing the obtained point cloud information when the first sensing device or the second sensing device performs sensing by using the radar sensing principle.

When the sensing data type is raw data, spectrum information, or point cloud information, the sensing function network element obtains the sensing data of the sensing data type, so that types of sensing results that are exposed by the sensing function network element to the service requester can be enriched.

In an optional implementation, the spectrum information or the point cloud information includes at least one of the following: a delay between receiving, by the first sensing device or the second sensing device, a reflected signal from a reflection point and sending a sensing signal by the first sensing device or the second sensing device, strength of the reflected signal, an azimuth angle of arrival of the reflected signal relative to the first sensing device or the second sensing device, a zenith angle of arrival of the reflected signal relative to the first sensing device or the second sensing device, a velocity direction azimuth angle of a sensing object relative to the first sensing device or the second sensing device, a velocity direction elevation angle of the sensing object relative to the first sensing device or the second sensing device, a velocity of the reflection point relative to the first sensing device or the second sensing device, a time stamp of the spectrum information or the point cloud information, or a data source of the spectrum information or the point cloud information.

In another optional implementation, the spectrum information or the point cloud information includes at least one of the following: a distance between a reflection point and the first sensing device or the second sensing device, an azimuth angle of the reflection point relative to the first sensing device or the second sensing device, an elevation angle of the reflection point relative to the first sensing device or the second sensing device, a velocity direction azimuth angle of the reflection point relative to the first sensing device or the second sensing device, a velocity direction elevation angle of the reflection point relative to the first sensing device or the second sensing device, a velocity of the reflection point relative to the first sensing device or the second sensing device, a time stamp of the spectrum information or the point cloud information, or a data source of the spectrum information or the point cloud information.

In still another optional implementation, the spectrum information or the point cloud information includes at least one of the following: coordinates of a reflection point, a velocity direction azimuth angle of the reflection point, a velocity direction elevation angle of the reflection point, a velocity of the reflection point, a time stamp of the spectrum information or the point cloud information, or a data source of the spectrum information or the point cloud information.

In an optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, a distance between the sensing object and the first sensing device or the second sensing device, an azimuth angle of the sensing object relative to the first sensing device or the second sensing device, an elevation angle of the sensing object relative to the first sensing device or the second sensing device, a velocity of the sensing object relative to the first sensing device or the second sensing device, a velocity direction azimuth angle of the sensing object relative to the first sensing device or the second sensing device, a velocity direction elevation angle of the sensing object relative to the first sensing device or the second sensing device, a reflection cross-section of the sensing object, a time stamp of the sensing result, or a data source of the sensing result.

In another optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, coordinates of the sensing object, a velocity direction azimuth angle of the sensing object, a velocity direction elevation angle of the sensing object, a velocity of the sensing object, a reflection cross-section of the sensing object, a time stamp of the sensing result, or a data source of the sensing result.

In an optional implementation, the non-point cloud information includes channel state information corresponding to the sensing area, and the channel state information includes at least one of received power, received quality, channel quality, or a delay of a multipath signal.

According to a fifth aspect, an embodiment of this application provides a communication method. The method may be performed by a first sensing device. The first sensing device herein may refer to the first sensing device, or may refer to a processor, a module, a chip, a chip system, or the like that implements the method in the first sensing device. In this method, the first sensing device receives a first indication from a sensing function network element. The first indication indicates a first sensing data type, and the first sensing data type is one of one or more sensing data types supported by the first sensing device. The first sensing device receives sensing control information from the sensing function network element. The sensing control information is used to request the first sensing device to perform a first sensing service. The first sensing device sends sensing data of the first sensing data type to the sensing function network element. The sensing data is obtained by the first sensing device by performing the first sensing service.

In this embodiment of this application, the first sensing device receives the first sensing data type indicated by the sensing function network element, and after receiving, from the sensing function network element, the sensing control information that is used to request to perform the first sensing service, the first sensing device sends, to the sensing function network element, the sensing data that is of the first sensing data type and that is obtained by performing the first sensing service. This can improve sensing efficiency.

In an optional implementation, the first sensing data type supported by the first sensing device supports the first sensing service.

In an optional implementation, that the first sensing data type supports the first sensing service includes: the first sensing data type satisfies a sensing data type and/or a sensing result type of the first sensing service. This manner helps the sensing function network element obtain, based on the sensing data of the first sensing data type, sensing data of a sensing data type of the first sensing service, and/or a sensing result of a sensing result type of the first sensing service.

In an optional implementation, the first sensing device further performs the following step: receiving a second indication from the sensing function network element. The second indication indicates a first sensing principle, and the first sensing principle is one of one or more sensing principles supported by the first sensing device. In this manner, the first sensing device can perform the sensing service based on the first sensing principle indicated by the sensing function network element. This can improve the sensing efficiency.

In an optional implementation, the first sensing data type is one of raw data, spectrum information, point cloud information, non-point cloud information, and a sensing result. The raw data, the spectrum information, the point cloud information, and the sensing result are obtained when the first sensing device or the second sensing device performs sensing by using a radar sensing principle. The non-point cloud information is obtained when the first sensing device or the second sensing device performs sensing by using a non-radar sensing principle.

Specifically, the raw data is obtained by processing a received reflected signal when the first sensing device or the second sensing device performs sensing by using the radar sensing principle; the spectrum information is obtained by processing the obtained raw data when the first sensing device or the second sensing device performs sensing by using the radar sensing principle; the point cloud information is obtained by processing the obtained spectrum information when the first sensing device or the second sensing device performs sensing by using the radar sensing principle; and the sensing result is obtained by processing the obtained point cloud information when the first sensing device or the second sensing device performs sensing by using the radar sensing principle.

When the sensing data type is raw data, spectrum information, or point cloud information, the sensing function network element obtains the sensing data of the sensing data type. This can enrich types of sensing results that are exposed by the sensing function network element to the service requester.

In an optional implementation, the spectrum information or the point cloud information includes at least one of the following: a delay between receiving, by the first sensing device or the second sensing device, a reflected signal from a reflection point and sending a sensing signal by the first sensing device or the second sensing device, strength of the reflected signal, an azimuth angle of arrival of the reflected signal relative to the first sensing device or the second sensing device, a zenith angle of arrival of the reflected signal relative to the first sensing device or the second sensing device, a velocity direction azimuth angle of a sensing object relative to the first sensing device or the second sensing device, a velocity direction elevation angle of the sensing object relative to the first sensing device or the second sensing device, a velocity of the reflection point relative to the first sensing device or the second sensing device, a time stamp of the spectrum information or the point cloud information, or a data source of the spectrum information or the point cloud information.

In another optional implementation, the spectrum information or the point cloud information includes at least one of the following: a distance between a reflection point and the first sensing device or the second sensing device, an azimuth angle of the reflection point relative to the first sensing device or the second sensing device, an elevation angle of the reflection point relative to the first sensing device or the second sensing device, a velocity direction azimuth angle of the reflection point relative to the first sensing device or the second sensing device, a velocity direction elevation angle of the reflection point relative to the first sensing device or the second sensing device, a velocity of the reflection point relative to the first sensing device or the second sensing device, a time stamp of the spectrum information or the point cloud information, or a data source of the spectrum information or the point cloud information.

In still another optional implementation, the spectrum information or the point cloud information includes at least one of the following: coordinates of a reflection point, a velocity direction azimuth angle of the reflection point, a velocity direction elevation angle of the reflection point, a velocity of the reflection point, a time stamp of the spectrum information or the point cloud information, or a data source of the spectrum information or the point cloud information.

In an optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, a distance between the sensing object and the first sensing device or the second sensing device, an azimuth angle of the sensing object relative to the first sensing device or the second sensing device, an elevation angle of the sensing object relative to the first sensing device or the second sensing device, a velocity of the sensing object relative to the first sensing device or the second sensing device, a velocity direction azimuth angle of the sensing object relative to the first sensing device or the second sensing device, a velocity direction elevation angle of the sensing object relative to the first sensing device or the second sensing device, a reflection cross-section of the sensing object, a time stamp of the sensing result, or a data source of the sensing result.

In another optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, coordinates of the sensing object, a velocity direction azimuth angle of the sensing object, a velocity direction elevation angle of the sensing object, a velocity of the sensing object, a reflection cross-section of the sensing object, a time stamp of the sensing result, or a data source of the sensing result.

In an optional implementation, the non-point cloud information includes channel state information corresponding to the sensing area, and the channel state information includes at least one of received power, received quality, channel quality, or a delay of a multipath signal.

According to a sixth aspect, an embodiment of this application further provides a communication apparatus. The communication apparatus has a function of implementing a part or all of the sensing function network element in the first aspect or the fourth aspect, or a function of implementing a part or all of the first sensing device in the second aspect or the fifth aspect, or a function of implementing a part or all of the second sensing device in the third aspect. For example, functions of the communication apparatus may have functions in some or all embodiments of the sensing function network element in the first aspect in embodiments of this application, or may have functions of independently implementing any one of embodiments of this application. The functions may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit, and the apparatus is used in a sensing function network element.

The processing unit is configured to determine a sensing data type based on sensing information.

The communication unit is configured to send, to a first sensing device, information indicating the sensing data type.

The communication unit is further configured to receive sensing data of the sensing data type from the first sensing device.

In addition, for another optional implementation of the communication apparatus in this aspect, refer to related content in the first aspect. Details are not described herein again.

In another implementation, the communication apparatus includes a processing unit and a communication unit, and the apparatus is used in a first sensing device. The processing unit is configured to process a signal/signaling.

The communication unit is configured to receive, from a sensing function network element, information indicating a sensing data type. The sensing data type is determined based on sensing information.

The communication unit is further configured to send sensing data of the sensing data type to the sensing function network element.

In addition, for another optional implementation of the communication apparatus in this aspect, refer to related content in the second aspect. Details are not described herein again.

In still another implementation, the communication apparatus includes a processing unit and a communication unit, and the apparatus is used in a second sensing device. The processing unit is configured to process a signal/signaling.

The communication unit is configured to receive information indicating an intermediate data type. The intermediate data type is used by the second sensing device to determine intermediate data to be sent to a first sensing device, and the intermediate data is used by the first sensing device to obtain sensing data.

The communication unit is further configured to send the intermediate data to the first sensing device. The intermediate data is determined by the second sensing device based on the intermediate data type.

In addition, for another optional implementation of the communication apparatus in this aspect, refer to related content in the third aspect. Details are not described herein again.

In yet another implementation, the communication apparatus includes a processing unit and a communication unit, and the apparatus is used in a sensing function network element.

The processing unit is configured to obtain one or more sensing data types supported by a first sensing device.

The communication unit is configured to send a first indication to the first sensing device. The first indication indicates a first sensing data type determined from the one or more sensing data types.

The communication unit is further configured to receive a sensing service request of a first sensing service from a service requester.

The processing unit is further configured to send sensing control information to the first sensing device based on the sensing service request. The sensing control information is used to request the first sensing device to perform the first sensing service.

The communication unit is further configured to receive sensing data of the first sensing data type from the first sensing device. The sensing data is obtained by the first sensing device by performing the first sensing service.

In addition, for another optional implementation of the communication apparatus in this aspect, refer to related content in the fourth aspect. Details are not described herein again.

In still yet another implementation, the communication apparatus includes a processing unit and a communication unit, and the apparatus is used in a first sensing device. The processing unit is configured to process signaling/a signal.

The communication unit is configured to receive a first indication from a sensing function network element. The first indication indicates a first sensing data type, and the first sensing data type is one of one or more sensing data types supported by the first sensing device.

The communication unit is further configured to receive sensing control information from the sensing function network element. The sensing control information is used to request the first sensing device to perform a first sensing service.

The communication unit is further configured to send sensing data of the first sensing data type to the sensing function network element. The sensing data is obtained by the first sensing device by performing the first sensing service.

In addition, for another optional implementation of the communication apparatus in this aspect, refer to related content in the fifth aspect. Details are not described herein again.

For example, the communication unit may be a transceiver or a communication interface, the storage unit may be a memory, and the processing unit may be a processor.

In an implementation, the communication apparatus includes a processor and a transceiver, and the apparatus is used in a sensing function network element.

The processor is configured to determine a sensing data type based on sensing information.

The transceiver is configured to send, to a first sensing device, information indicating the sensing data type.

The transceiver is further configured to receive sensing data of the sensing data type from the first sensing device.

In addition, for another optional implementation of the communication apparatus in this aspect, refer to related content in the first aspect. Details are not described herein again.

In another implementation, the communication apparatus includes a processor and a transceiver, and the apparatus is used in a first sensing device. The processor is configured to process a signal/signaling.

The transceiver is configured to receive, from a sensing function network element, information indicating a sensing data type. The sensing data type is determined based on sensing information.

The transceiver is further configured to send sensing data of the sensing data type to the sensing function network element.

In addition, for another optional implementation of the communication apparatus in this aspect, refer to related content in the second aspect. Details are not described herein again.

In still another implementation, the communication apparatus includes a processor and a transceiver, and the apparatus is used in a second sensing device. The processor is configured to process a signal/signaling.

The transceiver is configured to receive information indicating an intermediate data type. The intermediate data type is used by the second sensing device to determine intermediate data to be sent to a first sensing device, and the intermediate data is used by the first sensing device to obtain sensing data.

The transceiver is further configured to send the intermediate data to the first sensing device. The intermediate data is determined by the second sensing device based on the intermediate data type.

In addition, for another optional implementation of the communication apparatus in this aspect, refer to related content in the third aspect. Details are not described herein again.

In yet another implementation, the communication apparatus includes a processor and a transceiver, and the apparatus is used in a sensing function network element.

The processor is configured to obtain one or more sensing data types supported by a first sensing device.

The transceiver is configured to send a first indication to the first sensing device. The first indication indicates a first sensing data type determined from the one or more sensing data types.

The transceiver is further configured to receive a sensing service request of a first sensing service from a service requester.

The processor is further configured to send sensing control information to the first sensing device based on the sensing service request. The sensing control information is used to request the first sensing device to perform the first sensing service.

The transceiver is further configured to receive sensing data of the first sensing data type from the first sensing device. The sensing data is obtained by the first sensing device by performing the first sensing service.

In addition, for another optional implementation of the communication apparatus in this aspect, refer to related content in the fourth aspect. Details are not described herein again.

In still yet another implementation, the communication apparatus includes a processing unit and a communication unit, and the apparatus is used in a first sensing device. The processor is configured to process a signal/signaling.

The transceiver is configured to receive a first indication from a sensing function network element. The first indication indicates a first sensing data type, and the first sensing data type is one of one or more sensing data types supported by the first sensing device.

The transceiver is further configured to receive sensing control information from the sensing function network element. The sensing control information is used to request the first sensing device to perform a first sensing service.

The transceiver is further configured to send sensing data of the first sensing data type to the sensing function network element. The sensing data is obtained by the first sensing device by performing the first sensing service.

In addition, for another optional implementation of the communication apparatus in this aspect, refer to related content in the fifth aspect. Details are not described herein again.

In another implementation, the communication apparatus is a chip or a chip system. The processing unit may alternatively be represented as a processing circuit or a logic circuit. The communication unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. Such a chip may be referred to as a system on a chip (system on a chip, SoC). Whether the components are independently disposed on different chips or integrated and disposed on one or more chips usually depends on a requirement of a product design. Specific implementations of the foregoing components are not limited in this embodiment of this application.

According to a seventh aspect, an embodiment of this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the input information, the transceiver receives the information, and inputs the information to the processor. Further, after the transceiver receives the information, other processing may need to be performed on the information before the information is input into the processor.

Unless otherwise specified, operations such as sending and receiving related to the processor may be more generally understood as operations such as output, receiving, and input of the processor if the operations do not conflict with actual functions or internal logic of the operations in related descriptions, instead of operations such as sending and receiving directly performed by a radio frequency circuit and an antenna.

In an implementation process, the processor may be a processor specially configured to perform the methods, or may be a processor, for example, a general-purpose processor, that executes computer instructions in a memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to an eighth aspect, an embodiment of this application further provides a communication system. The system includes a sensing function network element and a first sensing device. Optionally, the system further includes a second sensing device. In another possible design, the system may further include another device/function network element that interacts with the sensing function network element, the first sensing device, and the second sensing device.

According to a ninth aspect, an embodiment of this application provides a computer-readable storage medium, configured to store instructions. When the instructions are run by a computer, the method according to any one of the first aspect to the fifth aspect is implemented.

According to a tenth aspect, an embodiment of this application further provides a computer program product including instructions. When the computer program product runs on a computer, the method according to any one of the first aspect to the fifth aspect is implemented.

According to an eleventh aspect, an embodiment of this application provides a chip system. The chip system includes a processor and an interface. The interface is configured to obtain a program or instructions. The processor is configured to invoke the program or the instructions to implement or support a sensing function network element in implementing a function in the first aspect or the fourth aspect, or implement or support a first sensing device in implementing a function in the second aspect or the fifth aspect, or implement or support a second sensing device in implementing a function in the third aspect, for example, determining or processing at least one of data and information in the foregoing methods. In a possible design, the chip system further includes a memory. The memory is configured to store program instructions and data that are necessary for a terminal. The chip system may include a chip, or may include a chip and another discrete component.

According to a twelfth aspect, an embodiment of this application provides a communication apparatus, including a processor, configured to execute a computer program or executable instructions stored in a memory. When the computer program or the executable instructions are executed, the apparatus is caused to perform the method according to the possible implementations of the first aspect to the fifth aspect.

In a possible implementation, the processor and the memory are integrated together.

In another possible implementation, the memory is located outside the communication apparatus.

For beneficial effects of the sixth aspect to the twelfth aspect, refer to the beneficial effects of the first aspect to the fifth aspect. Details are not described herein again.

### BRIEF DESCRIPTION OF DRAWINGS

FIG. 1 is a diagram of a system architecture;
FIG. 2 is a diagram of performing a sensing service by a RAN;
FIG. 3 is a diagram of sensing;
FIG. 4 is a diagram of a sensing procedure;
FIG. 5 is an interaction diagram of a communication method according to an embodiment of this application;
FIG. 6 is an interaction diagram of another communication method according to an embodiment of this application;
FIG. 7 is an interaction diagram of still another communication method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

The following clearly and completely describes technical solutions in embodiments of this application with reference to accompanying drawings in embodiments of this application.

To better understand embodiments of this application, the following first describes a system architecture in embodiments of this application.

Embodiments of this application may be applied to a 4th generation (4th generation, 4G) communication system, for example, a long term evolution (long term evolution, LTE) system, and a 5th generation (5th generation, 5G) communication system, for example, a new radio (new radio, NR) system. With continuous development of communication technologies, the technical solutions in embodiments of this application may be further applied to subsequently evolved communication systems, for example, a 6th generation (6th generation, 6G) mobile communication technology system and a 7th generation (7th generation, 7G) mobile communication technology system.

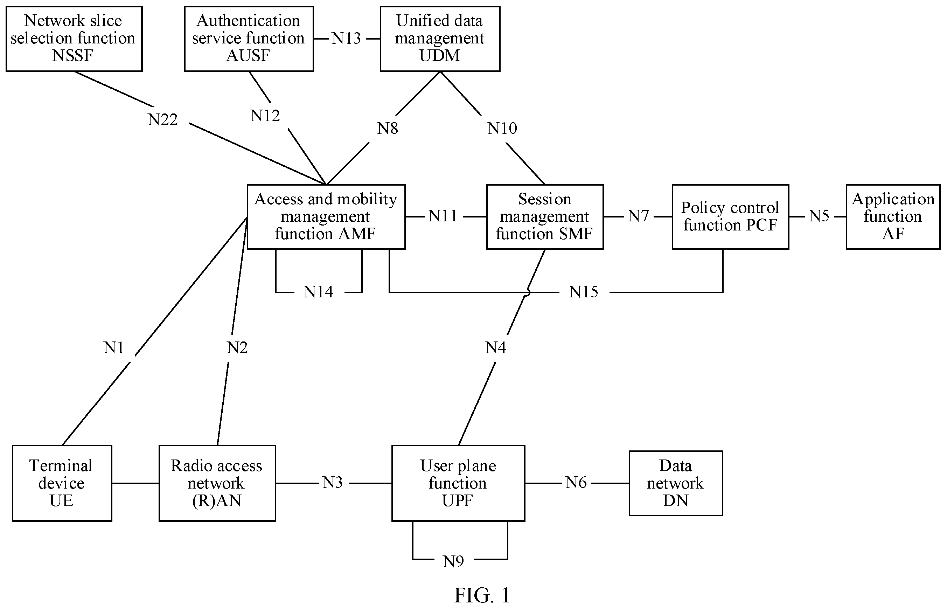

FIG. 1 is a diagram of a system architecture according to an embodiment of this application. The system architecture includes network function entities such as a terminal device, a (radio) access network ((radio) access network, (R)AN), a user plane function (user plane function, UPF), a data network (data network, DN), and an access and mobility management function (access and mobility management function, AMF). As shown in FIG. 1, the terminal device may access a wireless network, to obtain a service of an external network (for example, the data network (data network, DN)) through the wireless network or communicate with another device, for example, another terminal device, through the wireless network. The following separately describes in detail devices/function network elements involved in the system architecture in FIG. 1.

The terminal device may include various handheld devices, vehicle-mounted devices, wearable devices, or compute devices that have a wireless communication function, or other processing devices connected to a wireless modem. The terminal device may also be referred to as a terminal. The terminal device may alternatively be a user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a smart point of sale (point of sale, POS) machine, a customer-premises equipment (customer-premises equipment, CPE), a machine type communication (machine type communication, MTC) terminal, a communication device mounted on a high-altitude airplane, a wearable device, an uncrewed aerial vehicle, a robot, a terminal in device-to-device (device-to-device, D2D), a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

The RAN is a network including a plurality of 5G-RAN nodes, and implements a radio physical layer function, a resource scheduling function, a radio resource management function, a radio access control function, and a mobility management function. The 5G-RAN is connected to the UPF through a user plane interface N3, and is configured to perform transmission of data of the terminal device. The 5G-RAN establishes a control plane signaling connection to the AMF through a control plane interface N2, and is configured to implement functions like radio access bearer control. The RAN node may be a base station in a 5G network or a base station in a future evolved communication system, a broadband network gateway (broadband network gateway, BNG), an aggregation switch, a non-3rd generation partnership project (3rd generation partnership project, 3GPP) access device, or the like. Optionally, the RAN node in embodiments of this application may include various forms of base stations, for example, a macro base station, a micro base station (also referred to as a small cell), a relay station, an access point, a device that implements a base station function in a communication system evolved after 5G, a transmission reception point (transmission reception point, TRP), a transmission point (transmission point, TP), an integrated access and backhaul node (integrated access and backhaul node, IAB node), a mobile switching center, and a device that undertakes a base station function in D2D and machine-to-machine (machine-to-machine, M2M) communication. This is not specifically limited in embodiments of this application.

The following network function entities may be understood as core network devices.

The AMF network element is mainly responsible for functions such as UE authentication, UE mobility management, network slice selection, and session management function (session management function, SMF) selection. The AMF network element serves as an anchor for connecting N1 signaling and N2 signaling, and provides routing of an N1/N2 SM message for the SMF network element. The AMF network element maintains and manages status information of the UE.

The SMF network element is mainly responsible for all control plane functions of UE session management, including UPF selection, internet protocol (internet protocol, IP) address allocation, quality of service (quality of service, QoS) management of a session, obtaining a policy and charging control (policy and charging control, PCC) policy (from a policy control function (policy control function, PCF)), and the like.

The UPF network element serves as an anchor point of a protocol data unit (protocol data unit, PDU) session connection, and is responsible for data packet filtering, data transmission/forwarding, rate control, generation of charging information, and the like of the user equipment.

A unified data management (unified data management, UDM) network element mainly manages and controls user data, for example, manages subscription information, including: obtaining the subscription information from a unified data repository (unified data repository, UDR) function network element and providing the subscription information for another network element (for example, the AMF network element); generates 3rd generation partnership project (3rd generation partnership project, 3GPP) authentication credentials for the UE; and registers and maintains a network element currently serving the UE (for example, an AMF represented by an AMF ID 1 is a current serving AMF of the UE).

The UDR network element is mainly configured to store user data, including subscription data invoked by the UDM network element, policy information invoked by the PCF network element, structured data for capability exposure, and application data invoked by a network exposure function (network element function, NEF) network element.

As a network capability exposure network element, the NEF network element is used for connection and interaction between another internal network element of the core network and an external application server of the core network, to provide network capability information for the external application server, or provide information about the external application server for the core network element.

An application function (application function, AF) network element interacts with a core network element to provide some services, for example, interacts with the PCF network element to perform service policy control, interacts with the NEF network element to obtain some network capability information or provide some application information for a network, and provides some data network access point information for the PCF network element to generate routing information of a corresponding data service.

An authentication service function (authentication service function, AUSF) network element is configured to perform security authentication on the UE when the UE accesses a network.

A network slice selection function (network slice selection function, NSSF) network element selects a set of network slice instances serving the UE, and determines an AMF set and allowed slice selection assistance information (network slice selection assistance information, NSSAI) for the UE.

The PCF network element provides configuration policy information for the UE, and provides policy information for controlling the UE for a control plane network element (for example, the AMF network element or the SMF network element) of the network.

It may be understood that when the solutions in embodiments of this application are applied to a 6G or future communication system, a name of a corresponding network functional entity may change. This is not limited in this application.

The network device or the terminal device using a radio band (for example, a 4G band, a 5G band, a 6G band, a millimeter-wave band, or a terahertz band) has a sensing capability, so that the wireless communication system can perform sensing and recognition for a specific area or a specific object or event, to satisfy sensing requirements in a plurality of scenarios. For example, for smart transportation and an uncrewed aerial vehicle (unmanned aerial vehicle, UAV), a sensing range of a vehicle or the uncrewed aerial vehicle is short or a non-line-of-sight (non-line-of-sight, NLOS) path cannot be sensed. The wireless communication system may generate, based on sensing of the base station and the terminal device, large-range multi-view sensing information for route planning, anti-collision, autonomous driving assistance, and the like. For another example, in a driving process of the vehicle or the uncrewed aerial vehicle, for a dangerous event like a sudden appearance of a person or an object, the wireless communication system may recognize a dangerous event based on sensing, and notify the terminal device to perform an emergency operation. For another example, for monitoring a driving violation behavior, for example, the vehicle occupying an emergency lane and the uncrewed aerial vehicle deviating from a flight path, the wireless communication system may recognize a vehicle violation based on sensing and perform real-time alarm/post-event punishment. For another example, for a foreign matter (a person, an animal, a stone, or the like) that intrudes into a highway or a railway track, or the uncrewed aerial vehicle that intrudes into a no-fly zone (for example, an airport), the wireless communication system may recognize the foreign matter based on sensing and perform real-time emergency processing. For another example, in a home health monitoring scenario, for example, detection of an abnormal posture like a person falling down, the wireless communication system may recognize the abnormal posture based on sensing and generate an alarm. For another example, for health detection such as human breathing/heartbeat detection, the wireless communication system may recognize an abnormal indicator based on sensing and generate an alarm. For another example, in a weather monitoring scenario, the wireless communication system may perform sensing detection or prediction on an environment, a climate, or a weather change.

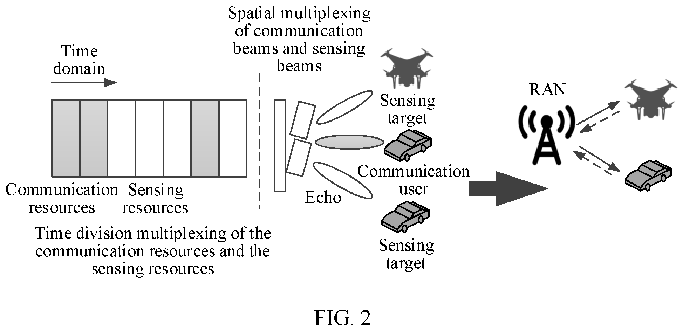

FIG. 2 is a diagram of performing a sensing service by a RAN. As shown in FIG. 2, the RAN may communicate with a communication user by using communication resources, and sense sensing targets by using sensing resources. The communication resources and the sensing resources of the RAN are time division multiplexed. In addition, beams used by the RAN for communication and sensing are spatially multiplexed. The RAN may communicate with the communication user by using a part of the beams, and sense the sensing targets by using other beams. A procedure in which the RAN performs sensing includes: sending a sensing signal to a sensing area, receiving a reflected signal reflected by a sensing target in the sensing area, and processing the reflected signal to obtain sensing data.

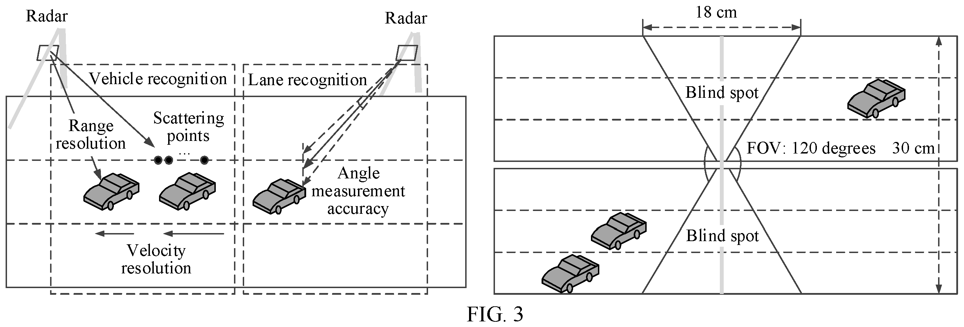

FIG. 3 is a diagram of sensing. Specifically, FIG. 3 is a diagram of sensing in a V2X scenario. As shown in FIG. 3, key performance indicators in the V2X scenario include range resolution, velocity resolution, angle measurement accuracy, and a horizontal field of view (field of view, FOV). The range resolution refers to a capability of distinguishing between adjacent targets in terms of range, is usually measured at a minimum recognizable range interval, and may be used for recognizing different vehicles. The velocity resolution refers to a capability of distinguishing between targets in terms of radial velocity, is usually measured by using a minimum recognizable velocity interval, and may be used for distinguishing between vehicles with different velocities. The angle measurement accuracy refers to an error between a measurement value and a real value of a measured target at an angle, and may be used for determining a lane in which a vehicle is located. The horizontal field of view FOV refers to a range that can be covered by sensing of a sensing device. For example, as shown in FIG. 3, when the FOV is 120 degrees, when a width of a two-way road is 30 m, a two-way blind spot range is less than 18 m, and a blind spot area proportion is less than 1%.

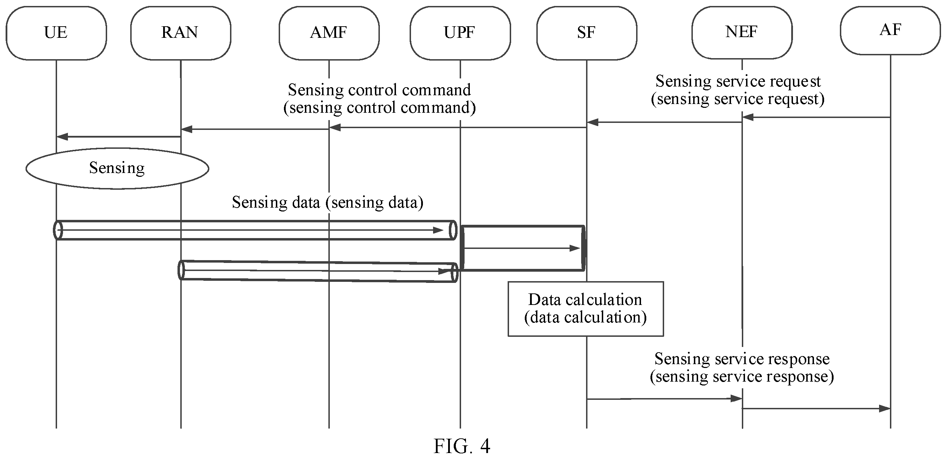

FIG. 4 is a diagram of a sensing procedure. As shown in FIG. 4, an AF network element sends a sensing service request (sensing service request) to a sensing function (sensing function, SF) network element via a NEF network element. The SF network element sends a sensing control command (sensing control command) to a RAN and/or a UE via an AMF network element, or the SF network element directly sends the sensing control command to the RAN and/or the UE. The RAN and/or the UE perform/performs sensing based on a sensing requirement in the sensing control command, and reports obtained sensing data to the SF network element. For example, the RAN or the UE sends the sensing data to the SF network element via the UPF network element, or the RAN or the UE directly sends the sensing data to the SF network element. The SF network element performs data calculation (data calculation) on the received sensing data to obtain a sensing result. The SF network element sends a sensing service response (sensing service response) to the AF network element via the NEF network element. The sensing service response includes a sensing result.

It should be noted that the SF network element may be one of network elements in a 5G core network (5G core, 5GC), or may be a non-core network element. This is not particularly limited in this application. When the SF network element is one of the network elements in the 5G core network, the SF network element may be connected to another network element in the 5G core network through a service-based architecture (service-based architecture, SBA) interface, that is, may communicate with the another network element in the 5G core network through the SBA interface. However, when the SF network element is the non-core network element, the SF network element cannot be connected to the another network element in the 5G core network through the SBA interface. In this case, the SF network element may need to interact with the another 5G core network element by performing forwarding by the NEF. Optionally, the SF network element may be implemented by another network element in the core network.

In addition, the SF may be an independently deployed network element or a network element deployed together with another device. For example, the SF may be a network element independently deployed in the core network or a network element deployed together with another core network device.

The sensing data obtained by the sensing device (for example, the RAN or the UE) through sensing is classified into the following data types in a data processing phase: raw data, spectrum information, point cloud information, and a sensing result. The raw data may be in-phase (in-phase)/orthogonal (orthogonal) data (namely, I/Q data) of a radio frequency signal, or may be understood as a time domain digital signal obtained after the sensing device performs analog-to-digital (analogue-to-digital, A/D) conversion on a received reflected signal (or echo signal). The spectrum information includes a range velocity (range velocity, RV) spectrum, a range Doppler (range Doppler, RD) spectrum, a range velocity angle (range velocity angle, RVA) spectrum, and a range Doppler angle (range Doppler angle, RDA) spectrum. The point cloud information may be understood as location information and a velocity of a scattering point detected by the sensing device. The sensing result may be understood as location information and velocity information of a target after a plurality of scattering points are aggregated into the target. Optionally, the sensing result may further include information such as a target size and a contour of the target. The spectrum information and/or the point cloud information may also be referred to as intermediate information, or referred to as intermediate processing information, or referred to as preprocessing information. In addition, if the sensing device performs sensing detection by using a non-radar sensing principle, the sensing data obtained by the sensing device may be non-point cloud information. For example, in rainfall monitoring, the sensing data is reference signal received power (reference signal received power, RSRP) of a reflected signal corresponding to detection area information.

It can be learned that the raw data, the spectrum information, the point cloud information, and the sensing result are obtained when the sensing device performs sensing by using a radar sensing principle. Specifically, the raw data is obtained by processing the received reflected signal when the sensing device performs sensing by using the radar sensing principle; the spectrum information is obtained by processing the obtained raw data when the sensing device performs sensing by using the radar sensing principle; the point cloud information is obtained by processing the obtained spectrum information when the sensing device performs sensing by using the radar sensing principle; and the sensing result is obtained by processing the obtained point cloud information when the sensing device performs sensing by using the radar sensing principle. The non-point cloud information is obtained when the sensing device performs sensing by using the non-radar sensing principle.

In addition, a sensing result that can be exposed by the core network device to a service requester depends on one or more of a sensing principle, a sensing service type, a sensing service requirement, a processing capability of the service requester, a data fusion effect, a responsibility risk, a security and privacy risk, a charging mode, or the like.

The sensing principle refers to a sensing principle supported by a network, and may include the radar sensing principle and/or the non-radar sensing principle. The radar sensing principle is obtaining object characteristic information or event characteristic information by processing an object-reflected signal received by a receiver. Optionally, the radar sensing principle is obtaining the object characteristic information or the event characteristic information by performing joint processing on a radio signal transmitted by a transmitter and the object-reflected signal received by the receiver. For example, the object characteristic information includes at least one of the following: whether an object exists, a location, a velocity, a size, or a contour. The event characteristic information includes at least one of the following: breathing, standing/lying, whether a person exists, whether a vehicle exists, or a large vehicle/a small vehicle/a motorcycle/a person.

The non-radar sensing principle is: obtaining the object characteristic information or the event characteristic information by measuring a change of radio channel state information; or obtaining the object characteristic information or the event characteristic information by using a camera; or obtaining the object characteristic information or the event characteristic information by using an ultrasonic wave; or obtaining the object characteristic information or the event characteristic information through thermal imaging. The radio channel state information may include at least one of RSRP, a channel quality indicator (channel quality indicator, CQI), or a delay.

A service type to which the radar sensing principle is applicable may include but is not limited to a sensing scenario of traffic supervision, autonomous driving assistance, UAV intrusion detection/obstacle avoidance/tracking, rainfall detection, human body posture detection, breath detection, or home intrusion detection. A service type to which the non-radar sensing principle is applicable may include but is not limited to a sensing scenario of rainfall detection, human body posture detection, breath detection, or home intrusion detection.

The sensing service requirement is one or more of a refresh rate, a sensing event, accuracy, resolution, a delay, a detection rate, or a false alarm rate of a sensing service. A service that has a refresh rate requirement (for example, reporting a status of an emergency lane on a highway at an interval of 1 second) may be referred to as a continuous service or a periodic sensing service. A service that has no refresh rate requirement or requests sensing only once (for example, reporting a road status at 100 km of the highway once) may be referred to as a single sensing service. A service that has a sensing event requirement (for example, detecting an animal entering the highway) may be referred to as an event service. For example, when the sensing service is dynamic map generation, the sensing service requirement is a continuous service, the measuring accuracy is 1 m, the resolution is 2 m, the delay is 100 ms, the detection rate is 99%, and the false alarm rate is 0.01%. For another example, when the sensing service is home intrusion detection, the sensing service requirement is an event service, the measuring accuracy is 3 m, the latency is 1s, the detection rate is 99.9%, and the false alarm rate is 1%. The processing capability of the service requester includes but is not limited to a compute capability. The data fusion effect refers to a high or low requirement on data fusion, a good or bad requirement on data fusion, or a fusion layer requirement (for example, fusion is performed at a raw data/spectrum information/point cloud information/sensing result layer). The responsibility risk refers to a risk level of the sensing service. The security and privacy risk is whether there is a risk in performing the sensing service. The charging mode refers to a charging mode used by an operator when the sensing service is performed. The charging mode includes but is not limited to a traffic plus accuracy charging mode and/or a duration plus accuracy charging mode.

For example, the sensing principle supported by the network is the radar sensing principle, the sensing service type is the autonomous driving assistance, the sensing service requirement is the continuous type and/or the sensing accuracy is 1 m, the processing capability of the requester is strong, the data fusion effect indicator requirement is high (for example, fusion is performed at the spectrum information or point cloud information layer), the responsibility risk is high, and the charging mode is the traffic plus accuracy mode. In this case, the sensing device can expose at least one of the spectrum information or the point cloud information to the service requester.

For another example, the sensing principle supported by the network is the radar sensing principle, the sensing service type is the home intrusion detection, the sensing service requirement is the event type, the processing capability of the service requester is weak (for example, an internet-of-things device), the data fusion effect indicator requirement is low, the responsibility risk is high, there is the security and privacy risk, and the charging mode is the duration plus accuracy. In this case, the sensing service can expose the sensing result to the service requester.

For still another example, the sensing principle supported by the network is the non-radar sensing principle, the sensing service type is the rainfall detection, the sensing service requirement is the continuous type, the processing capability of the service requester is strong, the data fusion effect indicator requirement is high, the responsibility risk is low, there is no security and privacy risk, and the charging mode is the duration plus accuracy. In this case, the sensing service can expose the non-point cloud information to the service requester.

For different sensing services, the sensing function network element expects to obtain different sensing data, that is, the different sensing services have differentiated requirements on the sensing data. In addition, even if sensing principles of different sensing services are the same, requirements on the sensing data may be different. Currently, when reporting sensing data to a core network device, the sensing device does not know a type of the sensing data that needs to be reported. Consequently, sensing efficiency may be reduced.

In embodiments of this application, a sensing mode may be self-sending and self-receiving, or may be self-sending and other-receiving. For example, the sensing mode is A-sending and A-receiving, or A-sending and B-receiving. For example, the sensing mode is at least one of the following: a base station A performs sending and receiving; the base station A performs sending and a base station B performs receiving; the base station A performs sending and a terminal device A performs receiving; the terminal device A performs sending and receiving; the terminal device A performs sending and the base station A performs receiving; or the terminal device A performs sending and the terminal device B performs receiving. The A-sending and A-receiving may be understood as: A sends a sensing signal to a sensing area, and A receives a reflected signal reflected by a sensing object in the sensing area for the sensing signal, so that A performs sensing and recognition based on the received reflected signal, or performs sensing and recognition based on the received reflected signal and the sent sensing signal. The A-sending and B-receiving may be understood as: A sends a sensing signal to a sensing area, and B receives a reflected signal reflected by a sensing object in the sensing area for the sensing signal, so that A or B performs sensing and recognition based on the received reflected signal, or performs sensing and recognition based on the received reflected signal and the sent sensing signal. The reflected signal may also be referred to as a scattered signal.

For example, when the sensing mode is that the base station A performs self-sending and self-receiving, the base station A sends a sensing signal to a sensing area, the base station A receives a reflected signal reflected by a sensing object in the sensing area for the sensing signal, and the base station A performs sensing and recognition on the sensing object based on the received reflected signal. For another example, when the sensing mode is that the base station A performs sending and the terminal device A performs receiving, the base station A sends a sensing signal to a sensing area, the terminal device A receives a reflected signal reflected by a sensing object in the sensing area for the sensing signal, and the terminal device A performs sensing and recognition on the sensing object based on the received reflected signal; or the terminal device A sends sensing data obtained by processing the reflected signal to the base station A, and the base station A performs sensing and recognition on the sensing object based on the sensing data.

In addition, the sensing mode in which the base station A performs self-sending and self-receiving is applicable to a sensing scenario of traffic supervision, autonomous driving assistance, uncrewed aerial vehicle intrusion detection/obstacle avoidance/tracking, flood/pedestrian traffic detection, or smart factory/automated guided vehicle (automated guided vehicle, AGV) tracking/anti-collision. A type of data measured in the sensing mode may be raw data, spectrum information, point cloud information, and a sensing result. The sensing mode in which the base station A performs sending and the base station B performs receiving is applicable to a sensing scenario of traffic supervision, autonomous driving assistance, uncrewed aerial vehicle intrusion detection/obstacle avoidance/tracking, flood/pedestrian traffic detection, smart factory/automated guided vehicle tracking/anti-collision, and weather monitoring (for example, rainfall monitoring). A type of data measured in the sensing mode may be raw data, spectrum information, point cloud information, and a final result, or may be non-point cloud information. The sensing mode in which the base station A performs sending and the terminal device A performs receiving is applicable to sensing scenarios of health care (for example, fall/breath monitoring), home intrusion detection, or smart factory (for example, AGV tracking/anti-collision). A type of data measured in the sensing mode may be raw data, spectrum information, point cloud information, or a final result, or may be non-point cloud information. A sensing scenario to which the sensing mode in which the terminal device A performs sending and the base station A performs receiving is applicable is the same as the sensing scenario to which the sensing mode in which "the base station performs sending and the terminal device performs receiving" is applicable. A type of data measured in the sensing mode may be raw data, spectrum information, point cloud information, or a final result, or may be non-point cloud information. The sensing mode in which the terminal device A performs self-sending and self-receiving is applicable to a sensing scenario of autonomous driving assistance or UAV tracking. A type of data measured in the sensing mode may be raw data, spectrum information, point cloud information, or a final result, or may be non-point cloud information. A sensing scenario to which the sensing mode in which the terminal device A performs sending and the terminal device B performs receiving is applicable is the same as the sensing scenario to which the sensing mode in which "the terminal device A performs self-sending and self-receiving" is applicable. A type of data measured in the sensing mode is the same as the type of the data measured in the sensing mode in which "the terminal device A performs self-sending and self-receiving".

In embodiments of this application, the spectrum information or the point cloud information includes at least one of the following: a difference between time for receiving a reflected signal of a reflection point by a first sensing device or a second sensing device and time for sending a sensing signal by the first sensing device or the second sensing device (for example, a relative time of arrival (relative time of arrival, RTOA) or a time difference of arrival (time difference of arrival, TDOA)), strength of the reflected signal (for example, RSRP of the reflected signal), an azimuth angle of arrival (azimuth angle of arrival, Azimuth AoA) of the reflected signal relative to the first sensing device or the second sensing device, a zenith angle of arrival (zenith angle of arrival, Zenith AoA) of the reflected signal relative to the first sensing device or the second sensing device, a velocity direction azimuth angle (azimuth angle) of a sensing object relative to the first sensing device or the second sensing device, a velocity direction elevation angle (elevation angle) of the sensing object relative to the first sensing device or the second sensing device, a velocity (velocity) of the reflection point relative to the first sensing device or the second sensing device, a time stamp (time stamp) of the spectrum information or the point cloud information, or a data source (data source) of the spectrum information or the point cloud information. The reflection point may be understood as a reflection point of an object or the sensing object.

In another optional implementation, the spectrum information or the point cloud information includes at least one of the following: a distance (range) between a reflection point and a first sensing device or a second sensing device, an azimuth angle of the reflection point relative to the first sensing device or the second sensing device, an elevation angle of the reflection point relative to the first sensing device or the second sensing device, a velocity direction azimuth angle of the reflection point relative to the first sensing device or the second sensing device, a velocity direction elevation angle of the reflection point relative to the first sensing device or the second sensing device, a velocity of the reflection point relative to the first sensing device or the second sensing device, a time stamp of the spectrum information or the point cloud information, or a data source of the spectrum information or the point cloud information.

In still another optional implementation, the spectrum information or the point cloud information includes at least one of the following: coordinates of a reflection point, a velocity direction azimuth angle of the reflection point, a velocity direction elevation angle of the reflection point, a velocity of the reflection point, a time stamp of the spectrum information or the point cloud information, or a data source of the spectrum information or the point cloud information.

In embodiments of this application, the sensing result includes at least one of the following: identification information (identity, ID) of the sensing object, a type (type) of the sensing object, a confidence probability (probability) of the type of the sensing object, a size (size) of the sensing object, a length (length) of the sensing object, a width (width) of the sensing object, a height (height) of the sensing object, a distance between the sensing object and the first sensing device or the second sensing device, an azimuth angle of the sensing object relative to the first sensing device or the second sensing device, an elevation angle of the sensing object relative to the first sensing device or the second sensing device, a velocity of the sensing object relative to the first sensing device or the second sensing device, a velocity direction azimuth angle of the sensing object relative to the first sensing device or the second sensing device, a velocity direction elevation angle of the sensing object relative to the first sensing device or the second sensing device, a reflection cross-section (reflection cross-section, RCS) of the sensing object, a time stamp of the sensing result, or a data source of the sensing result.

In another optional implementation, the sensing result includes at least one of the following: identification information of the sensing object, a type of the sensing object, a confidence probability of the type of the sensing object, a size of the sensing object, a length of the sensing object, a width of the sensing object, a height of the sensing object, coordinates of the sensing object, a velocity direction azimuth angle of the sensing object, a velocity direction elevation angle of the sensing object, a velocity of the sensing object, a reflection cross-section of the sensing object, a time stamp of the sensing result, or a data source of the sensing result.

In embodiments of this application, the non-point cloud information includes channel state information corresponding to the sensing area, and the channel state information includes at least one of received power, received quality, channel quality, or a delay of a multipath signal. The received power may be RSRP, the received quality may be reference signal received quality (reference signal received quality, RSRQ), and the channel quality may be a CQI.

In embodiments of this application, the first sensing device is a sensing device that needs to report the sensing data to the SF network element. In addition, when the sensing mode in this embodiment of this application is the self-sending and self-receiving sensing mode, and the sensing device is the first sensing device, the first sensing device is a sensing device that sends the sensing signal to the sensing area, receives the reflected signal reflected by the sensing object in the sensing area for the sensing signal, and reports the sensing data to the SF network element. When the sensing mode in this embodiment of this application is the self-sending and other-receiving sensing mode, the sensing device further includes the second sensing device. In this case, the first sensing device is a sensing device that sends the sensing signal to the sensing area and reports the sensing data, and the second sensing device is a sensing device that receives the reflected signal reflected by the sensing object in the sensing area for the sensing signal and that does not need to report the sensing data to the SF network element. When the sensing mode in this embodiment of this application is the self-sending and other-receiving sensing mode, the sensing device further includes a third sensing device. In this case, the third sensing device is a sensing device that sends the sensing signal to the sensing area, and the first sensing device is a sensing device that receives the reflected signal reflected by the sensing object in the sensing area for the sensing signal and that needs to report the sensing data to the SF network element.

In embodiments of this application, the sensing object is a target to be recognized/sensed in the sensing area. For example, the sensing object is a vehicle/person/obstacle to be recognized in the sensing area. A specific form of the sensing object is not limited in embodiments of this application.

In embodiments of this application, the service requester may be an AF network element, or may be a UE, or may be a client (client), or the like. A specific form of the service requester is not limited in embodiments of this application.

In embodiments of this application, the SF network element may be in a form in which a control plane is separated from a user plane, that is, an SF control plane (SF control plane, SF-C) function is separated from an SF user plane (SF user plane, SF-U) function. The SF-C may send a control command to the sensing device through the control plane. The SF-U may receive the sensing data from the sensing device through a data plane, and optionally process the sensing data to obtain a sensing result. The SF-C may control the SF-U. For example, the SF-C may select a suitable SF-U, and configure one or more of a recognition rule, a processing rule, or a routing rule for the sensing data on the SF-U. The sensing device may be the foregoing RAN, or may be a terminal device.

Optionally, the SF network element may be a location management function (location management function, LMF) network element, or the SF network element may be a part of the LMF. Alternatively, the SF network element and the LMF network element are co-located. This is not limited.

An embodiment of this application provides a communication method 100. In this method, an SF network element determines a sensing data type based on sensing information, and sends, to a first sensing device, information indicating the sensing data type. In this way, the first sensing device sends, to the SF network element, sensing data of the sensing data type indicated by the SF network element. This can improve sensing efficiency. In addition, the sensing data type is determined by the SF network element based on the sensing information, so that the sensing data received by the SF network element can match a differentiated requirement of the sensing information.

An embodiment of this application provides a communication method 200. Compared with the communication method 100, in the communication method 200, an SF further determines, based on a sensing result type requested by a service requester, that a type of a sensing result exposed to the service requester is a first type of a sensing result, so that the SF sends a sensing result of the first type of the sensing result to the service requester based on sensing data. This helps the service requester perform sensing and recognition based on the sensing result.

An embodiment of this application provides a communication method 300. In this method, an SF network element determines, based on the one or more sensing data types supported by a first sensing device, that a type of sensing data reported by the first sensing device is a first sensing data type in the one or more sensing data types. Therefore, when the SF network element determines, based on a sensing service request from a service requester, that the first sensing device is to perform a first sensing service in the sensing service request, the first sensing device performs the first sensing service to obtain sensing data of the first sensing data type, and send the sensing data of the first sensing data type to the SF network element. This can improve sensing efficiency.

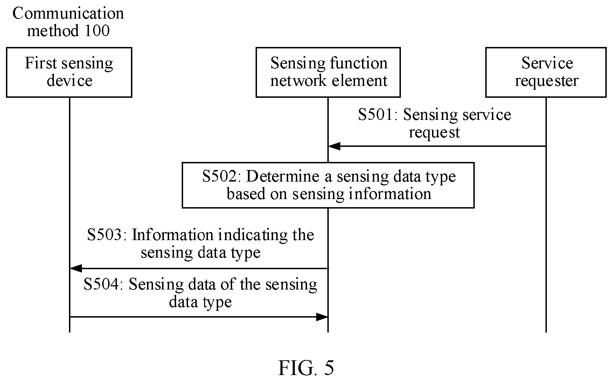

An embodiment of this application provides a communication method 100. FIG. 5 is an interaction diagram of the communication method 100. The communication method 100 is described from a perspective of interaction among a sensing function network element, a first sensing device, and a service requester. The communication method 100 includes but is not limited to the following steps.

S501: The service requester sends a sensing service request to the sensing function network element. Correspondingly, the sensing function network element receives the sensing service request from the service requester.

The sensing service request is used to request to perform a sensing service for a sensing area, and the sensing service request includes sensing service information and the sensing area. Optionally, the sensing service information includes information indicating one or more of a sensing service type, a sensing principle, a sensing performance indicator requirement, a data fusion effect indicator requirement, a security and privacy requirement, or a sensing mode.

The sensing service type includes but is not limited to traffic supervision sensing, autonomous driving assistance sensing, health care sensing, weather monitoring sensing, and the like. The sensing principle refers to a principle used by a sensing device to perform a sensing service, and includes but is not limited to a radar sensing principle and/or a non-radar sensing principle. For the radar sensing principle and the non-radar sensing principle, refer to the foregoing descriptions. Details are not described again. Optionally, the sensing principle may further include a correspondence between the sensing principle and a service type. The sensing performance indicator requirement refers to some performance indicators required by the sensing service. Performance indicator parameters include but are not limited to range accuracy, range resolution, velocity accuracy, velocity resolution, angle accuracy, angle resolution, detection rate, false alarm rate, and the like. The data fusion effect indicator requirement is a high data fusion effect indicator requirement or a poor data fusion effect. For example, a sensing service of autonomous driving assistance has a high data fusion effect indicator requirement, and a sensing service of road supervision has a low data fusion effect indicator requirement. The security and privacy requirement refers to privacy of a performed sensing service. For example, a sensing service of breath detection has a high privacy requirement, and a sensing service of vehicle flow and vehicle velocity monitoring has a low privacy requirement. An operator policy refers to a charging policy of an operator. The sensing mode is self-sending and self-receiving, or self-sending and other-receiving. For details about the self-sending and self-receiving mode and the self-sending and other-receiving mode, refer to the foregoing descriptions. Details are not described again.

It may be understood that when determining that sensing and recognition need to be performed on a sensing object in the sensing area, the service requester sends the sensing service request to the SF network element, to request to perform the sensing service for the sensing area.

In an optional implementation, when the service requester is a terminal device, the terminal device sends the sensing service request to the SF network element via an AMF network element. The AMF network element may transparently transmit the sensing service request, or the AMF network element parses the sensing service request, and sends a related information element in the sensing service request to the SF network element via a new message. Optionally, the AMF network element may further perform authorization check on a sensing service requested by the terminal device, for example, check whether the terminal device is authorized to perform the sensing service and request the sensing service.

In another optional implementation, when the service requester is an AF network element or a client (client), the AF network element or the client may send the sensing service request to the SF network element via the AMF network element. The AMF network element may transparently transmit the sensing service request, or may parse the sensing service request and send a related information element in the sensing service request to the SF network element via a new message.

The AF network element or the client may send the sensing service request to the AMF network element in a plurality of manners. For example, the AF network element or the client directly sends the sensing service request to the AMF network element. For another example, the AF network element or the client sends the sensing service request to the AMF network element via a NEF network element and a gateway mobility sensing center (gateway mobile sensing center, GMSC) network element. The NEF network element is responsible for performing authorization check on the AF network element/client, and the GMSC network element is responsible for selecting a suitable AMF network element. For still another example, the AF network element/client sends the service request to the AMF network element via a NEF network element. The NEF network element is responsible for performing authorization check on the AF network element/client, and is responsible for selecting a suitable AMF network element. For yet another example, the AF network element/client sends the sensing service request to the AMF network element via a GMSC network element. The GMSC network element is responsible for performing authorization check on the AF network element/client, and is responsible for selecting a suitable AMF network element.

In still another optional implementation, the AF network element or the client does not send the sensing service request to the SF network element via an AMF network element. For example, the AF network element or the client directly sends the sensing service request to the SF network element. For another example, the AF network element or the client sends the sensing service request to the SF network element via a NEF network element and a GMSC network element. The NEF network element is responsible for performing authorization check on the AF network element/client, and the GMSC network element is responsible for selecting a suitable SF network element. For still another example, the AF network element or the client sends the sensing service request to the SF network element via a NEF network element. The NEF network element is responsible for performing authorization check on the AF network element/client, and is responsible for selecting a suitable SF network element. For yet another example, the AF network element or the client sends the sensing service request to the SF network element via a GMSC network element. The GMSC network element is responsible for performing authorization check on the AF network element/client, and is responsible for selecting a suitable SF network element.

S502: The sensing function network element determines a sensing data type based on sensing information.

It may be understood that, the SF network element determines, based on the sensing information, the sensing data type of sensing data to be reported by the first sensing device to the SF, to help the first sensing device report the sensing data of the sensing data type.

The sensing data type is one of raw data, spectrum information, point cloud information, non-point cloud information, and a sensing result. For the raw data, the spectrum information, the point cloud information, the non-point cloud information, and the sensing result, refer to the foregoing descriptions. Details are not described again.

In an optional implementation, the sensing information includes at least one of the following: the sensing service type, the sensing principle, the sensing performance indicator requirement, the data fusion effect indicator requirement, the security and privacy requirement, the operator policy, the sensing mode, a sensing device type, a sensing data type supported by a sensing device, or a processing capability of the service requester.

For one or more of the sensing service type, the sensing principle, the sensing performance indicator requirement, the data fusion effect indicator requirement, the security and privacy requirement, or the sensing mode, refer to the descriptions in S501. Details are not described again. The sensing device type may be a radio access device, for example, a base station, or may be a terminal device. The processing capability of the service requester may be a compute capability of the service requester, for example, a data processing capability of the service requester. For example, a processing capability of a terminal is weak, and a processing capability of an application server is strong.

In addition, one or more of the sensing service type, the sensing principle, the sensing performance indicator requirement, the data fusion effect indicator requirement, the security and privacy requirement, and the sensing mode may be determined by the SF network element based on the sensing service information in the sensing service request.

Optionally, one or more of the sensing service type, the sensing principle, the sensing performance indicator requirement, the data fusion effect indicator requirement, the security and privacy requirement, and the sensing mode are carried in the sensing service request. In this case, the SF network element determines, based on the received sensing service request, one or more of the sensing service type, the sensing principle, the sensing performance indicator requirement, the data fusion effect indicator requirement, the security and privacy requirement, and the sensing mode.

The operator policy may be determined by the operator and configured in the SF network element. For example, the operator policy is negotiated by the operator with one or more sensing application providers in advance and configured in the SF network element. The sensing data type supported by the sensing device may be actively reported by the sensing device to the SF network element, or may be reported by the sensing device to the SF network element based on a request of the SF network element, or may be obtained by the SF network element from another core network element. The processing capability of the service requester may be actively reported by the service requester to the SF network element, or may be reported by the service requester to the SF network element based on a request of the SF network element, or may be obtained by the SF network element from another core network element.

For example, when the sensing service type is traffic supervision sensing or the autonomous driving assistance sensing, the SF network element determines that the sensing data type is one of spectrum information and point cloud information. For example, when the sensing service type is weather monitoring sensing, the SF network element determines that the sensing data type is non-point cloud information. For example, when the sensing service type is health care sensing, the SF network element determines that the sensing data type is a sensing result.

For example, when the sensing data type supported by the sensing device is spectrum information and point cloud information, the SF network element determines that the sensing data type is spectrum information or point cloud information. For example, when the security and privacy requirement of the sensing service is greater than a preset requirement, or the security and privacy requirement is high, the SF network element determines that the sensing data type is one of raw data, spectrum information, or point cloud information. For example, when the security and privacy requirement of the sensing service is less than or equal to the requirement, or the security and privacy requirement is low, the SF network element determines that the sensing data type is a sensing result. For example, when the security and privacy requirement of the sensing service is less than or equal to the preset requirement, and the sensing data type supported by the first sensing device is point cloud information and a sensing result, the SF network element determines that the sensing data type is a sensing result.

For example, the sensing service type is traffic supervision sensing or the autonomous driving sensing, the sensing principle is the radar sensing principle, the data fusion effect indicator requirement is greater than a preset value, the security and privacy requirement is greater than a preset requirement, the processing capability of the service requester is greater than a preset capability, and the operator policy is a traffic plus accuracy mode. The SF network element determines that the sensing data type is spectrum information or point cloud information.

For example, the sensing service type is health care sensing, the data fusion effect indicator requirement is lower than a preset value, the security and privacy requirement is lower than a preset requirement, the processing capability of the service requester is lower than a preset capability, and the operator policy is a duration plus accuracy mode. The SF network element determines that the sensing data type is a sensing result.

In an optional implementation, that the SF network element determines the sensing data type based on the sensing information includes: determining, based on the sensing information and authorization information of the service requester, a first type of a sensing result exposed to the service requester, where the authorization information of the service requester includes a sensing result type authorized to the service requester; and determining the sensing data type based on the first type of the sensing result. Optionally, the sensing result type authorized to the service requester may be preconfigured in the NEF network element, the SF network element, or another core network element, for example, a sensing result type authorized by the SF network element to the service requester when the service requester is in a registration phase.

In another optional implementation, that the SF network element determines the sensing data type based on the sensing information includes: determining, based on the sensing information, a first type of a sensing result exposed to the service requester; and determining the sensing data type based on the first type of the sensing result.

In addition, the sensing result of the first type of the sensing result is data obtained by processing the sensing data of the sensing data type, or the first type of the sensing result is the same as the sensing data type. A manner in which the SF network element determines the sensing data type based on the determined first type of the sensing result helps the SF network element determine, based on the obtained sensing data, a sensing result that is of the first type of the sensing result and that is exposed to the service requester.

For example, if the SF network element determines, based on the sensing information and the authorization information of the service requester or based on the sensing information, that the first type of the sensing result exposed to the service requester is raw data, the SF network element determines that the sensing data type is raw data. For another example, if the SF network element determines, based on the sensing information and the authorization information of the service requester or based on the sensing information, that the first type of the sensing result exposed to the service requester is spectrum information, the SF network element determines that the sensing data type is raw data or spectrum information. For still another example, if the SF network element determines, based on the sensing information and the authorization information of the service requester or based on the sensing information, that the first type of the sensing result exposed to the service requester is point cloud information, the SF network element determines that the sensing data type is one of raw data, spectrum information, and point cloud information. For yet another example, if the SF network element determines, based on the sensing information and the authorization information of the service requester or based on the sensing information, that the first type of the sensing result exposed to the service requester is a sensing result, the SF network element determines that the sensing data type is one of raw data, spectrum information, point cloud information, and a sensing result.

Optionally, the sensing information may further include other information other than the sensing service type, the sensing principle, the sensing performance indicator requirement, the data fusion effect indicator requirement, the security and privacy requirement, the operator policy, the sensing mode, the sensing device type, the sensing data type supported by the sensing device, and the processing capability of the service requester. A specific form of the sensing information is not limited in embodiments of this application.

In an optional implementation, the SF network element may further send, to the service requester, information indicating the first type of the sensing result. In this way the service requester learns that the SF network element may expose the sensing result of the first type of the sensing result to the service requester. The service requester may determine whether the service requester can receive the sensing result of the first type of the sensing result. If the service requester determines that the service requester can receive the sensing result of the first type of the sensing result, the service requester sends an acknowledgment (acknowledge, ACK) to the SF network element. The ACK is used for determining that the service requester can receive the sensing result of the first type of the sensing result. If the service requester determines that the service requester cannot receive the sensing result of the first type of the sensing result, the service requester sends a negative acknowledgment (negative acknowledge, NACK) to the SF network element. The NACK indicates that the service requester cannot receive the sensing result of the first type of the sensing result. Optionally, when determining that the service requester can receive the sensing result of the first type of the sensing result, the service requester does not send an ACK to the SF network element. When the SF network element does not receive an ACK or a NACK, it is considered by default that the service requester can receive the sensing result of the first type of the sensing result.

It can be learned that the SF network element may negotiate, with the service requester by indicating the first type of the sensing result to the service requester, that a type of a sensing result exposed to the service requester is the first type of the sensing result.

S503: The sensing function network element sends, to the first sensing device, information indicating the sensing data type. Correspondingly, the first sensing device receives, from the sensing function network element, the information indicating the sensing data type.

The information indicating the sensing data type may be carried in sensing control information sent by the SF to the first sensing device. The sensing control information is used to request the first sensing device to perform the sensing service. Optionally, the information indicating the sensing data type is information different from the sensing control information.

In an optional implementation, that the SF network element sends, to the first sensing device, the information indicating the sensing data type includes: receiving a sensing service request from the service requester; and sending, to the first sensing device based on the sensing service request, the information indicating the sensing data type.

It can be learned that the SF network element receives the sensing service request from the service requester, determines the first sensing device based on the sensing service request, and sends, to the first sensing device, the information indicating the sensing data type, so that the first sensing device reports the sensing data of the sensing data type to the SF network element.

In an optional implementation, that the sensing function network element sends, to the first sensing device based on the sensing service request, the information indicating the sensing data type includes: determining the first sensing device based on a sensing area in the sensing service request; and sending, to the first sensing device, the information indicating the sensing data type.

It can be learned that the sensing service request includes the sensing area, and the SF network element determines the first sensing device in the sensing area as a sensing device performing the sensing service, to send, to the first sensing device, the information indicating the sensing data type.

In an optional implementation, that the sensing function network element determines the first sensing device based on the sensing area in the sensing service request includes: determining one or more sensing devices based on the sensing area in the sensing service request; and determining the first sensing device based on a sensing data type supported by the one or more sensing devices. The first sensing device supports the sensing data type determined by the sensing function network element. Optionally, if there are a plurality of sensing devices that support the sensing data type determined by the SF network element in the one or more sensing devices, the SF network element may use any one of the plurality of sensing devices that support the determined sensing data type as the first sensing device.

It can be learned that, the SF network element determines the one or more sensing devices in the sensing area, and determines, as the sensing device performing the sensing service, the first sensing device that supports the determined sensing data type and that is in the one or more sensing devices. For example, the sensing data type determined by the SF network element is point cloud information, the one or more sensing devices in the sensing area include a sensing device a and a sensing device b, a sensing data type supported by the sensing device a includes raw data and spectrum information, and a sensing data type supported by the sensing device b is point cloud information. In this case, the SF network element determines the sensing device b as the first sensing device.

For another example, the sensing data type determined by the SF network element is point cloud information, the one or more sensing devices in the sensing area include a sensing device a, a sensing device b, and a sensing device c, a sensing data type supported by the sensing device a includes raw data and spectrum information, a sensing data type supported by the sensing device b is point cloud information, and a sensing data type supported by the sensing device c is point cloud information and a sensing result. In this case, the SF network element determines that the first sensing device is the sensing device b or the sensing device c.

Optionally, the SF network element determines the one or more sensing devices in the sensing area, and determines, as the first sensing device, a sensing device that is in the one or more sensing devices and whose supported sensing data type can match the sensing data type determined by the SF network element. Optionally, if there are a plurality of terminal devices whose supported sensing data types can match the sensing data type determined by the SF network element in one or more terminal devices, the SF network element can determine, as the first sensing device, any one sensing device in the plurality of terminal devices whose supported sensing data types can match the sensing data type determined by the SF network element.

That the sensing data type supported by the sensing device can match the sensing data type determined by the SF network element may be understood as: If sensing data of the sensing data type determined by the SF network element can be determined based on the sensing data type supported by the sensing device, the sensing data supported by the sensing device can match the sensing data type determined by the SF network element. For example, the sensing data type supported by the sensing device a is raw data, the sensing data type determined by the SF network element is point cloud information, and the SF can determine the point cloud information based on the raw data supported by the sensing device a. In this case, the sensing data type supported by the sensing device a can match the sensing data type determined by the SF network element.

For example, the sensing data type determined by the SF network element is point cloud information, the one or more sensing devices in the sensing area include the sensing device a, the sensing device b, and the sensing device c, the sensing data type supported by the sensing device a includes raw data and spectrum information, the sensing data type supported by the sensing device b is point cloud information, and the sensing data type supported by the sensing device c is a sensing result. If the sensing data supported by the sensing device a can match the point cloud information, and the sensing data type supported by the sensing device b is the sensing data type determined by the SF network element, the SF network element determines that the first sensing device is the sensing device a or the sensing device b.

It can be learned that before sending, to the first sensing device, the information indicating the sensing data type, the sensing function network element determines the one or more sensing devices located in the sensing area, and determines, as the sensing device performing the sensing service, the first sensing device that supports or can match the sensing data type determined by the SF network element and that is in the one or more sensing devices. Therefore, the sensing function network element sends, to the first sensing device, the information indicating the sensing data type, to obtain the sensing data of the sensing data type.

S504: The first sensing device sends the sensing data of the sensing data type to the sensing function network element. Correspondingly, the sensing function network element receives the sensing data of the sensing data type from the first sensing device.

The first sensing device receives, from the SF network element, the information indicating the sensing data type, and learns that the sensing data of the sensing data type needs to be reported to the sensing function network element. In this way, the first sensing device sends the sensing data of the sensing data type to the SF network element.

Specifically, the first sensing device further receives the sensing control information from the SF network element. The sensing control information includes a sensing service type. In this way, the first sensing device performs a sensing service of the sensing service type, obtains the sensing data of the sensing data type, and sends the sensing data of the sensing data type to the SF network element.

It can be learned that the SF network element indicates the sensing data type of the reported sensing data to the first sensing device, so that the first sensing device sends the sensing data of the sensing data type to the SF network element, and the SF network element obtains the sensing data of the sensing data type. This can improve sensing efficiency. In addition, the SF network element indicates the sensing data type to the first sensing device, so that the first sensing device performs the sensing service based on the sensing data type, to obtain the sensing data of the sensing data type. This can improve sensing efficiency of performing the sensing service by the first sensing device.

In an optional implementation, the SF network element may further determine a sensing mode based on the sensing service type, the service performance indicator requirement, capability information of the sensing device, and the like in the sensing service request. The sensing mode is self-sending and self-receiving or self-sending and other-receiving. Then, the SF determines, based on the sensing mode and the sensing service request, the sensing device performing the sensing service.

In an optional implementation, the sensing device determined by the SF network element is the first sensing device, and the first sensing device sends a sensing signal to the sensing area, and receives a reflected signal reflected by the sensing object in the sensing area for the sensing signal. The first sensing device processes the received reflected signal, to obtain the sensing data of the sensing data type, and sends the sensing data of the sensing data type to the SF network element.

In another optional implementation, the sensing device determined by the SF network element further includes a second sensing device, and the second sensing device is configured to receive a reflected signal reflected by the sensing object in the sensing area for the sensing signal. In this manner, the SF network element may further send, to the second sensing device, information indicating an intermediate data type. The intermediate data type is used by the second sensing device to determine intermediate data to be sent to the first sensing device, and the intermediate data is used by the first sensing device to obtain the sensing data. The intermediate data type is determined by the SF network element based on the sensing data type.

It can be learned that when the SF network element determines that the sensing device performing the sensing service includes the first sensing device and the second sensing device, the SF network element sends, to the second sensing device, the information indicating the intermediate data type, and sends, to the first sensing device, the information indicating the sensing data type. The first sensing device sends the sensing signal to the sensing area, and the second sensing device receives the reflected signal reflected by the sensing object in the sensing area for the sensing signal. The second sensing device processes the reflected signal to obtain the intermediate data of the intermediate data type, and sends the intermediate data to the first sensing device. The first sensing device processes the intermediate data from the second sensing device, to obtain the sensing data of the sensing data type, and sends the sensing data to the SF network element, so that the SF network element obtains the sensing data of the sensing data type.

For example, the SF network element determines that the sensing device performing the sensing service includes a sensing device A and a sensing device B. The sensing device A is a sensing device that sends a sensing signal and reports sensing data, and the sensing device B is a sensing device that receives a reflected signal. The sensing data type is point cloud information. The SF network element determines, based on the sensing data type, that the intermediate data type is spectrum information. The SF network element sends, to the sensing device A, information indicating that the sensing data type is point cloud information, and sends, to the sensing device B, information indicating that the sensing data type is spectrum information. The sensing device A sends the sensing signal to the sensing area, and the sensing device B receives the reflected signal reflected by the sensing object in the sensing area for the sensing signal. The sensing device B processes the received reflected signals to obtain spectrum information, and sends the determined spectrum information to the sensing device A. The sensing device A processes the spectrum information to obtain point cloud information, and sends the determined point cloud information to the SF network element. In this way, the SF network element obtains sensing data whose data type is point cloud information.

Optionally, when the sensing device includes the first sensing device that reports the sensing data and the second sensing device that receives the reflected signal, the SF network element does not send, to the second sensing device, the information indicating the intermediate data type. The first sensing device determines the intermediate data type based on the sensing data type, and sends, to the second sensing device, information indicating the determined intermediate data type. In this way, the second sensing device processes the received reflected signal to obtain the intermediate data of the intermediate data type, and sends the intermediate data to the first sensing device. The second sensing device processes the intermediate data from the first sensing device, to obtain the sensing data of the sensing data type, and sends the sensing data to the SF network element.

Optionally, when the sensing device includes the first sensing device that reports the sensing data and the second sensing device that receives the reflected signal, the SF network element does not send, to the second sensing device, the information indicating the intermediate data type, and the first sensing device does not send, to the second sensing device, the information indicating the intermediate data type either. The second sensing device processes the received reflected signals to obtain raw data, and sends the raw data to the first sensing device. The first sensing device processes the raw data from the second sensing device, to obtain the sensing data of the sensing data type, and sends the sensing data to the SF network element. In this manner, the SF does not need to send, to the second sensing device, the information indicating the intermediate data type, and the first sensing device does not need to send, to the second sensing device, the information indicating the intermediate data type either. This can reduce signaling overheads.

It can be learned that, when the sensing device includes the first sensing device that reports the sensing data and the second sensing device that receives the reflected signal, the second sensing device may send, to the first sensing device, the intermediate data obtained by processing the reflected signal, or send, to the first sensing device, the raw data obtained by processing the reflected signal. Regardless of whether the second sensing device sends the intermediate data or the raw data to the first sensing device, the first sensing device may process the received data to obtain the sensing data of the sensing data type.

Optionally, when the sensing device includes the first sensing device that reports the sensing data and a third sensing device that transmits the sensing signal, the third sensing device sends the sensing signal to the sensing area, and the first sensing device receives the reflected signal reflected by the sensing object in the sensing area for the sensing signal. The first sensing device processes the received reflected signal to obtain the sensing data of the sensing data type.

In an optional implementation, when the sensing data type is one of raw data, spectrum information, and point cloud information, the SF network element obtains sensing data whose sensing data type is raw data, spectrum information, or point cloud information. This helps enrich types of sensing results exposed by the SF network element to the service requester. For example, if the sensing data type is raw data, the SF network element obtains sensing data whose type is raw data. Then, the SF network element may expose, to the service requester, data whose type is raw data, spectrum information, point cloud information, or a sensing result. For another example, if the sensing data type is spectrum information, the SF network element obtains sensing data whose type is spectrum information. Then, the SF network element may expose, to the service requester, data whose type is spectrum information, point cloud information, or a sensing result. If the sensing data type is point cloud information, the SF network element obtains sensing data whose type is point cloud information. Then, the SF network element may expose, to the service requester, data whose type is point cloud information and a sensing result.

In an optional implementation, the first sensing device may further send, to the SF network element, the information indicating the sensing data type. That is, the first sensing device may further report the sensing data type to the SF, so that the SF determines whether received sensing data is of the sensing data type indicated by the SF. The sensing data and the information indicating the sensing data type may be carried in same information, or may be carried in different information. For example, the sensing data type indicated by the SF network element to the first sensing device is point cloud information, and the first sensing device performs the sensing service to obtain the sensing data whose data type is point cloud information. In this case, the first sensing device sends the sensing data to the SF network element, and sends information indicating that a type of the sensing data is point cloud information, so that the SF network element determines that the received sensing data is sensing data that needs to be obtained.

In an optional implementation, if the SF network element negotiates with the service requester in S502 that the type of the sensing result exposed to the service requester is the first type of the sensing result, the SF network element may further send a sensing result of the first type of the sensing result to the service requester based on the sensing data. Specifically, the SF network element processes the sensing data to obtain a sensing result of the first type of the sensing result, and sends the obtained sensing result to the service requester. Optionally, the sensing result may be carried in a sensing service response. In this case, the service requester may use the sensing result in a sensing application. For example, the service requester determines, based on the sensing result, information such as a location of the sensing object, a type of the sensing object, a velocity of the sensing object, and a movement direction of the sensing object. For another example, the service requester determines, based on the sensing result, that a detected person falls down or another dangerous situation occurs. For another example, the service requester determines, based on the sensing result, that an unauthorized intrusion target appears in the sensing area.

In an optional implementation, the SF network element may further perform the following steps: determining the sensing principle based on the sensing service type and the sensing performance indicator requirement, where the sensing principle is the radar sensing principle or the non-radar sensing principle; and sending, to the first sensing device and/or the second sensing device, information indicating the sensing principle. Optionally, the SF network element may alternatively determine the sensing principle based on other information other than the sensing service type and the sensing performance indicator requirement.

That the SF network element sends, to the first sensing device and/or the second sensing device, the information indicating the sensing principle may be: The SF network element separately sends, to the first sensing device and the second sensing device, the information indicating the sensing principle; or the SF network element sends, to the first sensing device, the information indicating the sensing principle, and the first sensing device sends, to the second sensing device, the information indicating the sensing principle; or the SF network element sends, to the second sensing device, the information indicating the sensing principle, and the second sensing device sends, to the first sensing device, the information indicating the sensing principle. In conclusion, both the first sensing device and the second sensing device can learn of the sensing principle determined by the SF network element.

If the first sensing device receives, from the SF network element, the information indicating the sensing principle, after receiving the sensing control information from the SF network element, the first sensing device performs the sensing service based on the sensing principle indicated by the SF network element, to obtain the sensing data of the sensing data type. This can improve the sensing efficiency.

It can be learned that in this embodiment of this application, the SF network element determines the sensing data type based on the sensing information, and sends, to the first sensing device, the information indicating the sensing data type. In this way, the first sensing device sends, to the SF network element, the sensing data of the sensing data type. This can improve the sensing efficiency. In addition, the sensing data type is determined by the SF network element based on the sensing information, so that the sensing data received by the SF network element can match a differentiated requirement of the sensing information.

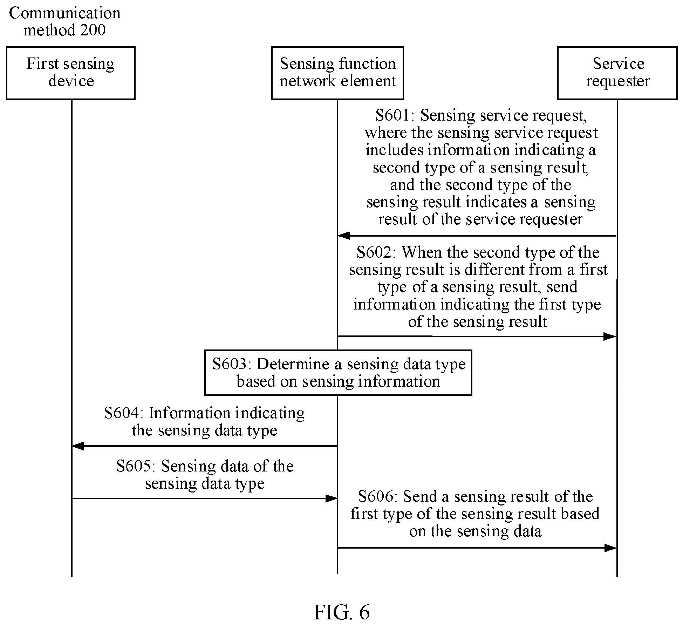

An embodiment of this application provides a communication method 200. FIG. 6 is an interaction diagram of the communication method 200. The communication method 200 is also described from a perspective of interaction among a sensing function network element, a first sensing device, and a service requester. The communication method 200 includes but is not limited to the following steps.

S601: The service requester sends a sensing service request to the sensing function network element, where the sensing service request includes information indicating a second type of a sensing result, and the second type of the sensing result indicates a sensing result of the service requester. Correspondingly, the sensing function network element receives the sensing service request from the service requester.

The sensing service request is used to request to perform a sensing service for a sensing area. The sensing service request includes sensing service information and the sensing area. The sensing service information includes the information indicating the second type of the sensing result, and the second type of the sensing result is one of raw data, spectrum information, point cloud information, non-point cloud information, and a sensing result.

Optionally, the sensing service information further includes information indicating one or more of a sensing service type, a sensing principle, a sensing performance indicator requirement, a data fusion effect indicator requirement, a security and privacy requirement, or a sensing mode. For this implementation, refer to the descriptions in S501. Details are not described herein again.

For an implementation in which the service requester sends the sensing service request to the SF network element, refer to the descriptions in S501. Details are not described again.

It may be understood that when determining that sensing and recognition need to be performed on a sensing object in the sensing area, the service requester sends the sensing service request to the SF network element, to request to perform the sensing service for the sensing area. In addition, the sensing service request includes the information indicating the second type of the sensing result. To be specific, the service requester further requests, via the sensing service request, the SF network element to expose a sensing result of the second type of the sensing result.

S602: When the second type of the sensing result is different from a first type of a sensing result, the sensing function network element sends, to the service requester, information indicating the first type of the sensing result. Correspondingly, the service requester receives, from the sensing function network element, the information indicating the first type of the sensing result.

The first type of the sensing result is determined by the SF network element based on sensing information and/or authorization information of the service requester and is a type of a sensing result exposed to the service requester. The first type of the sensing result is one of raw data, spectrum information, point cloud information, non-point cloud information, and a sensing result. For the sensing information, refer to the descriptions in S502. Details are not described again. The authorization information of the service requester includes a sensing result type authorized to the service requester. The sensing result type authorized to the service requester may be a sensing result type authorized by the SF network element or another core network element to the service requester in a registration phase of the service requester.

It can be learned that, the service requester requests, via the sensing service request, the SF network element to expose the second type of the sensing result, and when the second type of the sensing result requested by the service requester is different from the first type that is determined by the SF network element and that is of the sensing result that can be exposed to the service requester, the SF network element sends, to the service requester, the information indicating the first type of the sensing result. In this manner, the service requester can learn that the SF network element cannot expose the requested sensing result to the service requester, and can expose a sensing result of the first type of the sensing result.

Optionally, the service requester may determine whether the service requester can receive the sensing result of the first type of the sensing result. If determining that the service requester can receive the sensing result of the first type of the sensing result, the service requester sends an ACK to the SF network element. The ACK is used for determining that the sensing result of the first type of the sensing result can be received. If determining that the sensing result of the first type of the sensing result cannot be received, the service requester sends a NACK to the SF network element. The NACK indicates that the sensing result of the first type of the sensing result cannot be received. Optionally, when determining that the service requester can receive the sensing result of the first type of the sensing result, the service requester does not send an ACK to the SF network element. When the SF network element does not receive an ACK or a NACK, it is considered by default that the service requester can receive the sensing result of the first type of the sensing result.

Optionally, when the second type of the sensing result is the same as the first type of the sensing result, the SF network element determines that the sensing result of the second type of the sensing result requested by the service requester can be exposed to the service requester. When determining that the sensing result of the second result type can be exposed to the service requester, the SF network element may send an ACK to the service requester. The ACK indicates that the SF network element can expose the sensing result of the second type of the sensing result to the service requester. Optionally, when determining that the sensing result of the second result type can be exposed to the service requester, the SF network element does not send an ACK to the service requester. When the service requester does not receive the ACK or does not receive the information indicating the first type of the sensing result, it is considered by default that the SF network element can expose the sensing result of the second type of the sensing result to the service requester. Therefore, the service requester and the SF network element reach an agreement, and the SF network element may subsequently expose the sensing result of the second type of the sensing result to the service requester, or may expose the sensing result of the first type of the sensing result to the service requester.

Optionally, the sensing service request does not include the information indicating the second type of the sensing result. After sending the sensing service request to the SF network element, the service requester sends, to the SF network element, the information indicating the second type of the sensing result, to request the SF network element to expose the sensing result of the second type of the sensing result. It can be learned that the information indicating the second type of the sensing result may be carried in information different from the sensing service request.

In conclusion, the service requester may negotiate, with the SF network element by actively indicating, to the SF network element, a type of a sensing result requested to be exposed, for a type of a sensing result exposed to the service requester.

S603: The sensing function network element determines a sensing data type based on the sensing information.

S604: The sensing function network element sends, to the first sensing device, information indicating the sensing data type. Correspondingly, the first sensing device receives, from the sensing function network element, the information indicating the sensing data type.

S605: The first sensing device sends sensing data of the sensing data type to the sensing function network element.

It may be understood that for S603 to S605, refer to S502 to S504. Details are not described again.

S606: The sensing function network element sends the sensing result of the first type of the sensing result to the service requester based on the sensing data.

It may be understood that, the SF network element negotiates, with the service requester through S601 and S602, that the type of the sensing result exposed to the service requester is the first type of the sensing result, so that the SF network element sends the sensing result of the first type of the sensing result to the service requester based on the sensing data. Specifically, the SF network element processes the sensing data to obtain the sensing result of the first type of the sensing result, and sends the obtained sensing result to the service requester.

For example, if the sensing data type is spectrum information, and the first type of the sensing result is point cloud information, the SF network element processes the sensing data to obtain a sensing result whose data type is point cloud information, and sends, to the service requester, the sensing result whose data type is the point cloud information.

Optionally, after obtaining the sensing result, the service requester further performs sensing and recognition on the sensing object in the sensing area based on the sensing result, or determines a result of the sensing service based on the sensing result.

Optionally, if the SF network element receives, from the service requester, a NACK indicating that the sensing result of a first sensing data type cannot be received, the SF network element does not perform S606. That is, the SF network element does not send the sensing result of the first type of the sensing result to the service requester based on the sensing data.

It can be learned that in this embodiment of this application, the service requester requests, via the sensing service request, the SF network element to expose the sensing result of the second type of the sensing result, so that when the second type of the sensing result is different from the first type of the sensing result that is determined by the SF network element, the SF network element negotiates with the service requester that the type of the sensing result exposed to the service requester is the first type of the sensing result. Further, the SF network element may expose the sensing result of the first type of the sensing result to the service requester based on the obtained sensing data.

In addition, the first sensing device sends, to the SF network element, the sensing data of the sensing data type indicated by the SF network element. This can improve sensing efficiency. The sensing data type is determined by the SF network element based on the sensing information, so that the sensing data received by the SF network element can match a differentiated requirement of the sensing information.

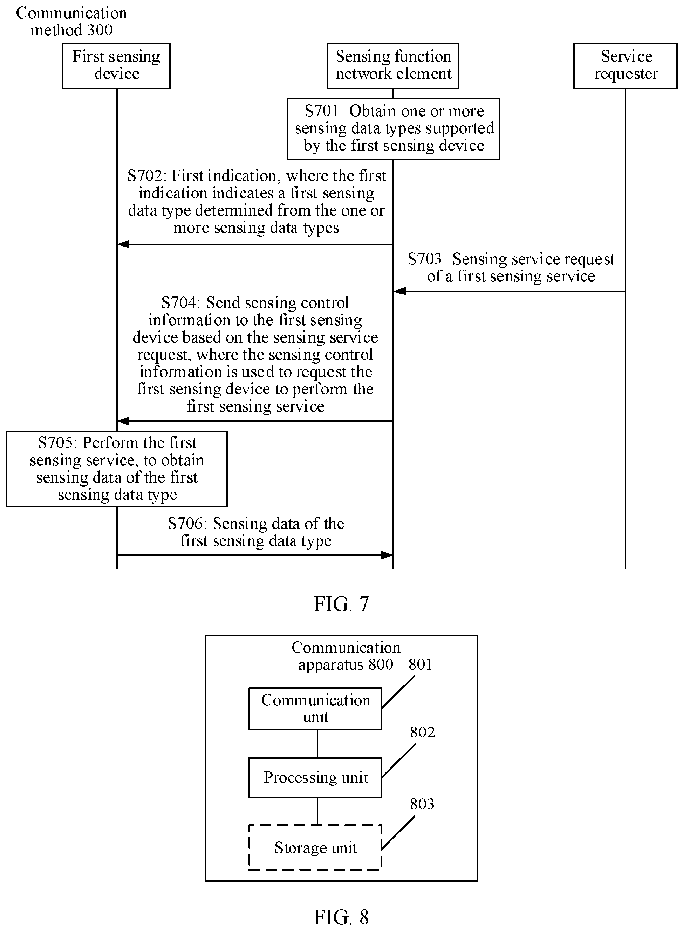

An embodiment of this application provides a communication method 300. FIG. 7 is an interaction diagram of the communication method 300. The communication method 300 is described from a perspective of interaction among a sensing function network element, a first sensing device, and a service requester. The communication method 300 includes but is not limited to the following steps.

S701: The sensing function network element obtains one or more sensing data types supported by the first sensing device.

The one or more sensing data types supported by the first sensing device include raw data, spectrum information, point cloud information, non-point cloud information, and a sensing result.

In an optional implementation, the first sensing device actively reports the one or more sensing data types supported by the first sensing device to the SF network element. In this way, that the SF network element obtains the one or more sensing data types supported by the first sensing device may be: The SF network element receives the one or more sensing data types from the first sensing device. The one or more sensing data types are sensing data types supported by the first sensing device.

In another optional implementation, when registering with, subscribing to, or accessing a network, the first sensing device reports, to another core network element, the one or more sensing data types supported by the first sensing device. In this way, that the SF network element obtains the one or more sensing data types supported by the first sensing device may be: The SF network element sensing service obtains, from another core network element, the one or more sensing data types supported by the first sensing device.

In still another optional implementation, that the SF network element obtains the one or more sensing data types supported by the first sensing device may be: The SF network element requests, from the first sensing device, to obtain the one or more sensing data types supported by the first sensing device, so that the first sensing device directly reports, to the SF network element, the one or more sensing data types supported by the first sensing device. Alternatively, the first sensing device reports, to the SF network element via another core network element, the one or more supported sensing data types. Correspondingly, the SF network element receives, via another core network element, the one or more sensing data types supported by the first sensing device.

It can be learned that the SF network element may flexibly obtain, in a plurality of manners, the one or more sensing data types supported by the first sensing device.

S702: The sensing function network element sends a first indication to the first sensing device, where the first indication indicates a first sensing data type determined from the one or more sensing data types. Correspondingly, the first sensing device receives the first indication from the sensing function network element.

It may be understood that the SF network element obtains the one or more sensing data types supported by the first sensing device, and determines, from the one or more sensing data types, a sensing data type used by the first sensing device to report sensing data to the SF network element. For example, the SF network element determines, from the one or more sensing data types, that the sensing data type used by the first sensing device to report the sensing data to the SF network element is the first sensing data type. Then, the SF network element indicates a first sensing device type to the first sensing device via the first indication. This helps the first sensing device report the sensing data of the first sensing data type to the SF network element when performing a sensing service. The first sensing data type is one of raw data, spectrum information, point cloud information, non-point cloud information, and a sensing result.

In an optional implementation, when the SF network element obtains one sensing data type supported by the first sensing device, the first indication sent by the SF network element to the first sensing device may be an accept (accept) message. The accept message indicates that the SF network element can receive sensing data of the sensing data type supported by the SF network element. For example, the sensing data type that is supported by the first sensing device and that is obtained by the SF network element is the first sensing data type, the first indication sent by the SF network element to the first sensing device is an accept message, and the accept message indicates that the SF network element can receive sensing data of the first sensing data type. In this manner, the SF network element negotiates with the first sensing device that the first sensing device reports the sensing data of the first sensing data type when reporting the sensing data to the SF network element.

It can be learned that the SF network element obtains the one or more sensing data types supported by the first sensing device, and indicates, to the first sensing device via the first indication, the first sensing data type determined from the one or more sensing data types, to negotiate with the first sensing device that the type of the sensing data reported to the SF is the first sensing data type. This helps the first sensing device perform more efficient sensing based on the first sensing data type.

S703: The service requester sends a sensing service request of a first sensing service to the sensing function network element. Correspondingly, the sensing function network element receives the sensing service request of the first sensing service from the service requester.

It may be understood that, when determining that the first sensing service needs to be performed, the service requester sends the sensing service request of the first sensing service to the SF network element. For an implementation in which the service requester sends the sensing service request of the first sensing service to the SF network element, refer to the descriptions in S501. Details are not described again.

S704: The sensing function network element sends sensing control information to the first sensing device based on the sensing service request, where the sensing control information is used to request the first sensing device to perform the first sensing service. Correspondingly, the first sensing device receives the sensing control information from the sensing function network element.

In an optional implementation, that the SF network element sends the sensing control information to the first sensing device based on the sensing service request includes: determining the first sensing device based on a sensing area in the sensing service request; and sending the sensing control information to the first sensing device. The first sensing device is a sensing device in the sensing area. It can be learned that, the sensing service request includes the sensing area, and the SF network element determines the first sensing device in the sensing area as a sensing device performing the first sensing service, to send the sensing control information to the first sensing device, to request the first sensing device to perform the first sensing service.

In an optional implementation, that the SF network element determines the first sensing device based on the sensing area in the sensing service request includes: determining one or more sensing devices based on the sensing area in the sensing service request; and determining the first sensing device based on a sensing data type supported by the one or more sensing devices. The first sensing data type supported by the first sensing device supports the first sensing service.

It can be learned that the SF network element determines the one or more sensing devices located in the sensing area, and determines the first sensing device based on the sensing data type supported by the one or more sensing devices. The first sensing data type supported by the first sensing device supports the first sensing service.

That the first sensing data type supports the first sensing service includes: The first sensing data type satisfies a sensing data type and/or a sensing result type of the first sensing service. The sensing data type and/or the sensing result type of the first sensing service are/is carried in the sensing service request, or the sensing data type and/or the sensing result type of the first sensing service are/is determined based on sensing information in the sensing service request and/or authorization information of the service requester.

In an optional implementation, when the first sensing data type is the sensing data type of the first sensing service, the first sensing data type satisfies the sensing data type and/or the sensing result type of the first sensing service. Optionally, when the SF network element can obtain, based on the sensing data of the first sensing data type, a sensing result of the sensing result type of the first sensing service, the first sensing data type satisfies the sensing data type and/or the sensing result type of the first sensing service. For example, the first sensing data type is raw data, the sensing result type of the first sensing service is point cloud information, and the SF network element can process data whose data type is raw data to obtain data whose data type is point cloud information. In this case, the SF network element determines that the first sensing data type satisfies the sensing data type and/or the sensing result type of the first sensing service. For another example, the first sensing data type is spectrum information, the sensing result type of the first sensing service is point cloud information, and the SF network element can process data whose data type is spectrum information to obtain data whose data type is point cloud information. In this case, the SF network element determines that the first sensing data type satisfies the sensing data type and/or the sensing result type of the first sensing service.

In an optional implementation, a service request of the first sensing service includes the sensing data type and/or the sensing result type of the first sensing service. Therefore, the SF network element obtains the sensing data type and/or the sensing result type of the first sensing service based on the service request of the first sensing service.

In another optional implementation, the sensing data type and/or the sensing result type of the first sensing service are/is determined by the SF network element based on the sensing information in the sensing service request and/or the authorization information of the service requester. The sensing information includes, but is not limited to, at least one of the following: a sensing service type, a sensing principle, a sensing performance indicator requirement, a data fusion effect indicator requirement, a security and privacy requirement, an operator policy, a sensing mode, a sensing device type, a sensing data type supported by a sensing device, or a processing capability of the service requester. For a specific implementation of the sensing information, refer to the descriptions in S502. Details are not described again. The authorization information of the service requester includes a sensing result type authorized to the service requester. The sensing result type authorized to the service requester may be a sensing result type authorized by the SF network element or another core network element to the service requester in a registration phase of the service requester.

For example, the sensing area included in the sensing service request of the first sensing service is an area A, the sensing area A includes a sensing device A and a sensing device B, a sensing data type supported by the sensing device A is raw data and spectrum information, a sensing data type supported by the sensing device B is point cloud information, and the sensing data type of the first sensing service is spectrum information. In this case, the SF network element determines that the sensing device A in the sensing area is to perform the first sensing service, that is, determines that the first sensing device is the sensing device A.

It may be understood that when the first sensing data type of the first sensing device satisfies the sensing data type and/or the sensing result type of the first sensing service, it indicates that the SF network element can obtain, based on the sensing data of the first sensing data type, sensing data and/or a sensing result that are/is needed by the first sensing service. Therefore, the SF network element determines the first sensing device as the sensing device performing the first sensing service. Further, the SF network element sends the sensing control information to the first sensing device, to request the first sensing device to perform the first sensing service.

Optionally, that the SF network element sends the sensing control information to the first sensing device based on the sensing service request is understood as: The SF network element determines whether the first sensing device satisfies a requirement of the first sensing service in the sensing service request. If determining that the first sensing device satisfies the requirement of the first sensing service, the SF determines that the first sensing device is to perform the first sensing service, and sends the sensing control information to the first sensing device.

Optionally, that the SF network element sends the sensing control information to the first sensing device based on the sensing service request is understood as: The SF network element determines whether a sensing data type (namely, the first sensing data type) negotiated with the first sensing device satisfies a requirement of the first sensing service in the sensing service request. If the first sensing data type satisfies the requirement of the first sensing service, the SF network element determines that the first sensing device is to perform the first sensing service, and sends the sensing control information to the first sensing device.

Optionally, that the SF network element sends the sensing control information to the first sensing device based on the sensing service request is understood as: The SF network element determines whether a sensing result type satisfies a requirement of the first sensing service in the sensing service request. The sensing result type is determined by the SF network element based on a sensing data type negotiated with the first sensing device, that is, the sensing result type is determined by the SF network element based on the first sensing data type. If the SF determines that the sensing result type satisfies the requirement of the first sensing service, the SF determines that the first sensing device is to perform the first sensing service, and sends the sensing control information to the first sensing device.

In conclusion, when the SF network element determines that the first sensing data type satisfies the requirement of the first sensing service in the sensing service request, the SF network element determines that the first sensing device is to perform the first sensing service, and sends, to the first sensing device, the sensing control information used to request the first sensing device to perform the first sensing service.

In an optional implementation, when the SF network element determines that the sensing device performing the first sensing service further includes a second sensing device, the SF network element may further send, to the second sensing device, information indicating an intermediate data type. The intermediate data type is determined by the SF network element based on the first sensing data type, and is used by the second sensing device to obtain intermediate data. The intermediate data is used by the first sensing device to obtain the sensing data of the first sensing data type.

Optionally, when the SF network element determines that the sensing device performing the first sensing service further includes a second sensing device, the first sensing device may further send, to the second sensing device, information indicating an intermediate data type. The intermediate data is determined by the first sensing device based on the first sensing data type, and is used by the first sensing device to obtain intermediate data. The intermediate data is used by the first sensing device to obtain the sensing data of the first sensing data type.

Optionally, when the SF network element determines that the sensing device performing the first sensing service further includes a second sensing device, the SF network element does not send, to the second sensing device, information indicating an intermediate data type, and the first sensing device does not send, to the second sensing device, information indicating an intermediate data type either. It may be understood that, for another implementation in the three implementations in which the SF network element determines that the sensing device performing the first sensing service further includes the second sensing device, refer to the descriptions in the communication method 100. Details are not described again.

S705: The first sensing device performs the first sensing service, to obtain the sensing data of the first sensing data type.

It may be understood that the first sensing device receives the sensing control information from the SF network element, and learns that the first sensing service needs to be performed, to perform the first sensing service. The first sensing device negotiates, through S701 and S702, with the SF network element that a sensing data type of the sensing data reported to the SF is the first sensing data type. Therefore, the first sensing device performs the first sensing service, to obtain the sensing data of the first sensing data type.

In an optional implementation, if the SF network element determines that the sensing device performing the first sensing service is the first sensing device, and does not include another sensing device, the first sensing device sends a sensing signal to the sensing area, and receives a reflected signal reflected by a sensing object in the sensing area for the sensing signal. The first sensing device processes the received reflected signal to obtain the sensing data of the first sensing data type.

In another optional implementation, the SF network element determines that the sensing device performing the first sensing service includes not only the first sensing device that sends a sensing signal and reports the sensing data, but also the second sensing device that receives a reflected signal. In this manner, the first sensing device sends the sensing signal to the sensing area, and the second sensing device receives the reflected signal reflected by a sensing object in the sensing area for the sensing signal. If the second sensing device receives the information indicating the intermediate data type, the second sensing device processes the received reflected signal to obtain the intermediate data of the intermediate data type, and sends the obtained intermediate data to the first sensing device. The first sensing device processes the received intermediate data to obtain the sensing data of the first sensing data type.

Optionally, if the second sensing device does not receive the information indicating the intermediate data type, after receiving the reflected signal reflected by the sensing object in the sensing area for the sensing signal, the second sensing device processes the reflected signal to obtain raw data, and sends the obtained raw data to the first sensing device. The first sensing device processes the received raw data to obtain the sensing data of the first sensing data type.

In still another optional implementation, the SF determines that the sensing device performing the first sensing service includes the first sensing device that reports the sensing data and receives a reflected signal, and further includes a third sensing device that sends a sensing signal. In this manner, the third sensing device sends the sensing signal to the sensing area, and the first sensing device receives the reflected signal reflected by a sensing object in the sensing area for the sensing signal. The first sensing device processes the received reflected signal to obtain the sensing data of the first sensing data type.

In an optional implementation, the SF network element may further obtain one or more sensing principles supported by the first sensing device, and send a second indication to the first sensing device. The second indication indicates a first sensing principle determined from the one or more sensing principles. For a manner in which the SF network element obtains the one or more sensing principles supported by the first sensing device, refer to the implementation in which the SF network element obtains the one or more sensing data types supported by the first sensing device. Details are not described.

It may be understood that the SF network element further pre-negotiates with the first sensing device for a sensing principle used by the first sensing device to perform the sensing service. Therefore, when performing the first sensing service, the first sensing device performs the first sensing service by using a first sensing principle, to obtain the sensing data of the first sensing data type. This can improve efficiency of performing the first sensing service by the first sensing device.

S706: The first sensing device sends the sensing data of the first sensing data type to the sensing function network element. Correspondingly, the sensing function network element receives the sensing data of the first sensing data type from the first sensing device.

It may be understood that, the SF network element pre-negotiates, with the first sensing device, that the type of the sensing data reported by the first sensing device is the first sensing data type. Therefore, if the SF network element selects the first sensing device to perform the first sensing service, the first sensing device performs the first sensing service, to obtain the sensing data of the first sensing data type, and sends the obtained sensing data to the SF network element. In this manner, the SF network element obtains the sensing data of the first sensing data type negotiated with the first sensing device. This can improve sensing efficiency.

In an optional implementation, the SF network element further sends, to the service requester, information indicating the sensing result type of the first sensing service. For the sensing result type of the first sensing service, refer to the foregoing descriptions. Details are not described again. After receiving the information indicating the sensing result type of the first sensing service, the service requester may further determine whether the service requester can receive the sensing result of the sensing result type of the first sensing service. When determining that the sensing result of the sensing result type of the first sensing service can be received, the service requester sends an ACK to the SF network element. The ACK is used for determining that the sensing result of the sensing result type of the first sensing service can be received.

In another optional implementation, the SF network element further receives a sensing result type from the service requester. The sensing result type of the service requester indicates a sensing result requested by the service requester. In this way, that the SF network element sends, to the service requester, the information indicating the sensing result type of the first sensing service includes: when the sensing result type of the service requester is different from the sensing result type of the first sensing service, sending, to the service requester, the information indicating the sensing result type of the first sensing service.

It can be learned that the service requester sends, to the SF network element, a sensing result type requested by the service requester, and the SF sends, to the service requester when the sensing result type of the service requester is different from the sensing result type of the first sensing service, the information indicating the sensing result type of the first sensing service. In this manner, the service requester can learn that the SF network element cannot expose the requested sensing result to the service requester, and can expose the sensing result of the sensing result type of the first sensing service. Optionally, the service requester may determine whether the service requester can receive the sensing result of the sensing result type of the first sensing service. If determining that the service requester can receive the sensing result of the sensing result type of the first sensing service, the service requester sends an ACK to the SF. The ACK is used for determining that the sensing result of the sensing result type of the first sensing service can be received. If determining that the sensing result of the sensing result type of the first sensing service cannot be received, the service requester sends a NACK to the SF network element. The NACK indicates that the sensing result of the sensing result type of the first sensing service cannot be received. Optionally, when determining that the service requester can receive the sensing result of the sensing result type of the first sensing service, the service requester does not send an ACK to the SF network element. When the SF does not receive an ACK or a NACK, it is considered by default that the service requester can receive the sensing result of the sensing result type of the first sensing service.

It can be learned that the SF network element may negotiate, with the service requester by directly indicating the sensing result type of the first sensing service to the service requester, for a type of a sensing result exposed to the service requester. Alternatively, the service requester may negotiate, with the SF network element by actively sending, to the SF, an indication indicating the requested sensing result type, for a type of a sensing result exposed to the service requester.

In an optional implementation, if the service requester negotiates with the SF network element that the type of the sensing result exposed to the service requester is the sensing result type of the first sensing service, the SF network element may further send the sensing result of the sensing result type of the first sensing service to the service requester based on the sensing data. Specifically, the SF network element processes the sensing data to obtain the sensing result of the sensing result type of the first sensing service, and sends the obtained sensing result to the service requester. This helps the service requester use the sensing result in a sensing application.

It can be learned that, in this embodiment of this application, the SF network element determines, based on the one or more sensing data types supported by the first sensing device, that the type of the sensing data reported by the first sensing device is the first sensing data type in the one or more sensing data types. Therefore, when the SF network element receives the sensing service request from the service requester, and determines, based on the sensing service request, that the first sensing device is to perform the first sensing service in the sensing service request, the first sensing device performs the first sensing service to obtain the sensing data of the first sensing data type, and send the sensing data of the first sensing data type to the SF network element. This can improve the sensing efficiency.

For the technical solutions described above, the following further describes corresponding apparatus implementation solutions.

To implement the functions in the foregoing methods provided in embodiments of this application, the sensing function network element and the first sensing device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

As shown in FIG. 8, an embodiment of this application provides a communication apparatus 800. The communication apparatus 800 may be a part (for example, an integrated circuit or a chip) of a sensing function network element, or may be a part (for example, an integrated circuit or a chip) of a first sensing device. Alternatively, the communication apparatus 800 may be another communication unit, configured to implement the methods in the method embodiments of this application. The communication apparatus 800 may include a communication unit 801 and a processing unit 802. Optionally, the communication apparatus 800 may further include a storage unit 803.

In a possible design, one or more units in FIG. 8 may be implemented by one or more processors; may be implemented by one or more processors and memories; or may be implemented by one or more processors and transceivers; or may be implemented by one or more processors, memories, and transceivers. This is not limited in this embodiment of this application. The processor, the memory, and the transceiver may be disposed separately, or may be integrated.

The communication apparatus 800 has a function of implementing the sensing function network element or the first sensing device described in embodiments of this application. For example, the communication apparatus 800 includes a corresponding module, unit, or means (means) used for a reader/writer to perform the steps related to the sensing function network element in the foregoing method embodiments. The functions, the units, or the means (means) may be implemented by software or hardware, or may be implemented by hardware executing corresponding software, or may be implemented by a combination of software and hardware. For details, further refer to the corresponding descriptions in the foregoing corresponding method embodiment.

In a possible design, the communication apparatus 800 may include the processing unit 802 and the communication unit 801. The apparatus is used in the sensing function network element. The processing unit 802 is configured to determine a sensing data type based on sensing information. The processing unit is further configured to broadcast one or more first identifiers based on time information corresponding to each of the one or more first identifiers. The communication unit 801 is configured to send, to the first sensing device, information indicating the sensing data type. The communication unit 801 is further configured to receive sensing data of the sensing data type from the first sensing device.

In an optional implementation, that the processing unit 802 determines the sensing data type based on the sensing information includes: determining, based on the sensing information and authorization information of a service requester, a first type of a sensing result exposed to the service requester, where the authorization information of the service requester includes a sensing result type authorized to the service requester; and determining the sensing data type based on the first type of the sensing result.

In another optional implementation, that the processing unit 802 determines the sensing data type based on the sensing information includes: determining, based on the sensing information, a first type of a sensing result exposed to the service requester; and determining the sensing data type based on the first type of the sensing result.

In an optional implementation, the communication unit 801 is further configured to send, to the service requester, information indicating the first type of the sensing result.

In an optional implementation, the communication unit 801 is further configured to receive, from the service requester, information indicating a second type of a sensing result. The second type of the sensing result indicates a sensing result requested by the service requester. That the communication unit 801 sends, to the service requester, the information indicating the first type of the sensing result includes: when the second type of the sensing result is different from the first type of the sensing result, sending, to the service requester, the information indicating the first type of the sensing result.

In an optional implementation, the processing unit 802 is further configured to: determine a sensing principle based on a sensing service type and a sensing performance indicator requirement, where the sensing principle is a radar sensing principle or a non-radar sensing principle; and send, to the first sensing device and/or a second sensing device, information indicating the sensing principle. The radar sensing principle is obtaining object characteristic information or event characteristic information by processing an object reflected signal received by a receiver. The non-radar sensing principle is: obtaining object characteristic information or event characteristic information by measuring a change of radio channel state information; or obtaining object characteristic information or event characteristic information by using a camera; or obtaining object characteristic information or event characteristic information by using an ultrasonic wave; or obtaining object characteristic information or event characteristic information through thermal imaging.

In an optional implementation, the communication unit 801 is further configured to send, to the second sensing device, information indicating an intermediate data type. The intermediate data type is used by the second sensing device to determine intermediate data to be sent to the first sensing device, and the intermediate data is used by the first sensing device to obtain the sensing data.

In an optional implementation, the sensing data type is one of raw data, spectrum information, point cloud information, non-point cloud information, and a sensing result. The raw data, the spectrum information, the point cloud information, and the sensing result are obtained when the first sensing device or the second sensing device performs sensing by using the radar sensing principle. The non-point cloud information is obtained when the first sensing device or the second sensing device performs sensing by using the non-radar sensing principle.

In an optional implementation, that the communication unit 801 sends, to the first sensing device, the information indicating the sensing data type includes: receiving a sensing service request from the service requester; and sending, to the first sensing device based on the sensing service request, the information indicating the sensing data type.

In an optional implementation, that the processing unit 802 sends, to the first sensing device based on the sensing service request, the information indicating the sensing data type includes: determining the first sensing device based on a sensing area in the sensing service request; and sending, to the first sensing device, the information indicating the sensing data type.

In an optional implementation, that the processing unit 802 determines the first sensing device based on the sensing area in the sensing service request includes: determining one or more sensing devices based on the sensing area in the sensing service request; and determining the first sensing device based on a sensing data type supported by the one or more sensing devices. The first sensing device supports the sensing data type.

This embodiment of this application and the foregoing method embodiments are based on a same concept, and bring same technical effects. For a specific principle, refer to the descriptions in the foregoing embodiments. Details are not described again.

In another possible design, the communication apparatus 800 may include the processing unit 802 and the communication unit 801, and the apparatus is used in the first sensing device. The processing unit 802 is configured to process a signal/signaling.

The communication unit 801 is configured to receive, from the sensing function network element, information indicating a sensing data type. The sensing data type is determined based on sensing information. The communication unit 801 is further configured to send sensing data of the sensing data type to the sensing function network element.

In an optional implementation, before the communication unit 801 sends the sensing data of the sensing data type to the sensing function network element, the method further includes: receiving, from the sensing function network element, information indicating a sensing principle, where the sensing principle is a radar sensing principle or a non-radar sensing principle, and the sensing principle is determined based on a sensing service type and a sensing performance indicator requirement; and performing a sensing service based on the sensing principle, to obtain the sensing data of the sensing data type. The radar sensing principle is obtaining object characteristic information or event characteristic information by processing an object reflected signal received by a receiver. The non-radar sensing principle is: obtaining object characteristic information or event characteristic information by measuring a change of radio channel state information; or obtaining object characteristic information or event characteristic information by using a camera; or obtaining object characteristic information or event characteristic information by using an ultrasonic wave; or obtaining object characteristic information or event characteristic information through thermal imaging.

In an optional implementation, before the communication unit 801 sends the sensing data of the sensing data type to the sensing function network element, the method further includes: receiving intermediate data of an intermediate data type from a second sensing device; and obtaining the sensing data of the sensing data type based on the intermediate data.

In an optional implementation, the sensing data type is one of raw data, spectrum information, point cloud information, non-point cloud information, and a sensing result. The raw data, the spectrum information, the point cloud information, and the sensing result are obtained when the first sensing device or the second sensing device performs sensing by using the radar sensing principle. The non-point cloud information is obtained when the first sensing device or the second sensing device performs sensing by using the non-radar sensing principle.

This embodiment of this application and the foregoing method embodiments are based on a same concept, and bring same technical effects. For a specific principle, refer to the descriptions in the foregoing embodiments. Details are not described again.

In still another possible design, the communication apparatus 800 may include the processing unit 802 and the communication unit 801, and the apparatus is used in a second sensing device. The processing unit 802 is configured to process a signal/signaling. The communication unit 801 is configured to receive information indicating an intermediate data type. The intermediate data type is used by the second sensing device to determine intermediate data to be sent to the first sensing device. The intermediate data is used by the first sensing device to obtain sensing data. The communication unit 801 is further configured to send the intermediate data to the first sensing device. The intermediate data is determined by the second sensing device based on the intermediate data type.

In an optional implementation, that the communication unit 801 receives the information indicating the intermediate data type includes: receiving, from the sensing function network element or the first sensing device, the information indicating the intermediate data type.

In an optional implementation, the communication unit 801 is further configured to receive, from the sensing function network element, information indicating a sensing principle. A radar sensing principle is obtaining object characteristic information or event characteristic information by processing an object-reflected signal received by a receiver. A non-radar sensing principle is: obtaining object characteristic information or event characteristic information by measuring a change of radio channel state information; or obtaining object characteristic information or event characteristic information by using a camera; or obtaining object characteristic information or event characteristic information by using an ultrasonic wave; or obtaining object characteristic information or event characteristic information through thermal imaging.

In an optional implementation, the intermediate data type is one of raw data, spectrum information, point cloud information, or non-point cloud information. The raw data, the spectrum information, and the point cloud information are obtained when the first sensing device or the second sensing device performs sensing by using the radar sensing principle, and the non-point cloud information is obtained when the first sensing device or the second sensing device performs sensing by using the non-radar sensing principle.

This embodiment of this application and the foregoing method embodiments are based on a same concept, and bring same technical effects. For a specific principle, refer to the descriptions in the foregoing embodiments. Details are not described again.

In yet another possible design, the communication apparatus 800 may include the processing unit 802 and the communication unit 801, and the apparatus is used in the sensing function network element.

The processing unit 802 is configured to obtain one or more sensing data types supported by the first sensing device. The communication unit 801 is configured to send a first indication to the first sensing device. The first indication indicates a first sensing data type determined from the one or more sensing data types. The communication unit 801 is further configured to receive a sensing service request of a first sensing service from a service requester. The processing unit 802 is further configured to send sensing control information to the first sensing device based on the sensing service request. The sensing control information is used to request the first sensing device to perform the first sensing service. The communication unit 801 is further configured to receive sensing data of the first sensing data type from the first sensing device. The sensing data is obtained by the first sensing device by performing the first sensing service.

In an optional implementation, that the processing unit 802 sends the sensing control information to the first sensing device based on the sensing service request includes: determining the first sensing device based on a sensing area in the sensing service request; and sending the sensing control information to the first sensing device.

In an optional implementation, that the processing unit 802 determines the first sensing device based on the sensing area in the sensing service request includes: determining one or more sensing devices based on the sensing area in the sensing service request; and determining the first sensing device based on a sensing data type supported by the one or more sensing devices. A first sensing data type supported by the first sensing device supports the first sensing service.

In an optional implementation, that the first sensing data type supports the first sensing service includes: The first sensing data type satisfies a sensing data type and/or a sensing result type of the first sensing service. The sensing data type and/or the sensing result type of the first sensing service are/is carried in the sensing service request, or the sensing data type and/or the sensing result type of the first sensing service are/is determined based on sensing information in the sensing service request and/or authorization information of the service requester.

In an optional implementation, the sensing information includes at least one of the following: a sensing service type, a sensing principle, a sensing performance indicator requirement, a data fusion effect indicator requirement, a security and privacy requirement, an operator policy, a sensing mode, a sensing device type, a sensing data type supported by a sensing device, or a processing capability of the service requester. The authorization information of the service requester includes a sensing result type authorized to the service requester.

In an optional implementation, the communication unit 801 is further configured to send, to the service requester, information indicating the sensing result type of the first sensing service.

In an optional implementation, the communication unit 801 is further configured to receive a sensing result type from the service requester. The sensing result type of the service requester indicates a sensing result requested by the service requester. That the communication unit 801 sends, to the service requester, the information indicating the sensing result type of the first sensing service includes: when the sensing result type of the service requester is different from the sensing result type of the first sensing service, sending, to the service requester, the information indicating the sensing result type of the first sensing service.

In an optional implementation, the processing unit 802 is further configured to: obtain one or more sensing principles supported by the first sensing device, and send a second indication to the first sensing device. The second indication indicates a first sensing principle determined from the one or more sensing principles.

In an optional implementation, the first sensing data type is one of raw data, spectrum information, point cloud information, non-point cloud information, and a sensing result. The raw data, the spectrum information, the point cloud information, and the sensing result are obtained when the first sensing device or the second sensing device performs sensing by using the radar sensing principle. The non-point cloud information is obtained when the first sensing device or the second sensing device performs sensing by using the non-radar sensing principle.

This embodiment of this application and the foregoing method embodiments are based on a same concept, and bring same technical effects. For a specific principle, refer to the descriptions in the foregoing embodiments. Details are not described again.

In still yet another possible design, the communication apparatus 800 may include the processing unit 802 and the communication unit 801, and the apparatus is used in the first sensing device. The processing unit 802 is configured to process signaling/a signal.

The communication unit 801 is configured to receive a first indication from the sensing function network element. The first indication indicates a first sensing data type, and the first sensing data type is one of one or more sensing data types supported by the first sensing device. The communication unit 801 is further configured to receive sensing control information from the sensing function network element. The sensing control information is used to request the first sensing device to perform a first sensing service. The communication unit 801 is further configured to send sensing data of the first sensing data type to the sensing function network element. The sensing data is obtained by the first sensing device by performing the first sensing service.

In an optional implementation, the first sensing data type supported by the first sensing device supports the first sensing service.

In an optional implementation, that the first sensing data type supports the first sensing service includes: the first sensing data type satisfies a sensing data type and/or a sensing result type of the first sensing service.

In an optional implementation, the communication unit 801 is further configured to receive a second indication from the sensing function network element. The second indication indicates a first sensing principle, and the first sensing principle is one of one or more sensing principles supported by the first sensing device.

In an optional implementation, the first sensing data type is one of raw data, spectrum information, point cloud information, non-point cloud information, and a sensing result. The raw data, the spectrum information, the point cloud information, and the sensing result are obtained when the first sensing device or the second sensing device performs sensing by using the radar sensing principle. The non-point cloud information is obtained when the first sensing device or the second sensing device performs sensing by using the non-radar sensing principle.

This embodiment of this application and the foregoing method embodiments are based on a same concept, and bring same technical effects. For a specific principle, refer to the descriptions in the foregoing embodiments. Details are not described again.

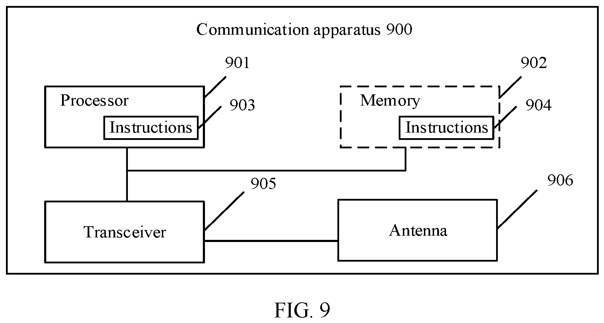

An embodiment of this application further provides a communication apparatus 900. FIG. 9 is a diagram of a structure of the communication apparatus 900. The communication apparatus 900 may be a sensing function network element, or may be a chip, a chip system, a processor, or the like that supports the sensing function network element in implementing the foregoing method; or may be a first sensing device, or may be a chip, a chip system, a processor, or the like that supports the first sensing device in implementing the foregoing method. The apparatus may be configured to implement the methods described in the foregoing method embodiments. For details, refer to the descriptions in the foregoing method embodiments.

The communication apparatus 900 may include one or more processors 901. The processor 901 may be a general-purpose processor, a dedicated processor, or the like. For example, the processor 901 may be a baseband processor, a digital signal processor, an application-specific integrated circuit, a field programmable gate array or another programmable logic device, a discrete gate or transistor logic device, a discrete hardware component, or a central processing unit (central processing unit, CPU). The baseband processor may be configured to process a communication protocol and communication data. The central processing unit may be configured to control the communication apparatus (for example, a base station, a baseband chip, a terminal, a terminal chip, a distributed unit (distributed unit, DU), or a central unit (centralized unit, CU)), execute a software program, and process data of the software program.

Optionally, the communication apparatus 900 may include one or more memories 902. The memory 902 may store instructions 904, and the instructions may be run on the processor 901, to cause the communication apparatus 900 to perform the methods described in the foregoing method embodiments. Optionally, the memory 902 may further store data. The processor 901 and the memory 902 may be separately disposed, or may be integrated together.

Optionally, the communication apparatus 900 may further include a transceiver 905 and an antenna 906. The transceiver 905 may be referred to as a transceiver unit, a transceiver machine, a transceiver circuit, or the like, and is configured to implement a receiving/sending function. The transceiver 905 may include a receiver and a transmitter. The receiver may be referred to as a receiver machine, a receiver circuit, or the like, and is configured to implement the receiving function. The transmitter may be referred to as a transmitter machine, a transmitter circuit, or the like, and is configured to implement the sending function.

In a possible design, the communication apparatus 900 may be used in the sensing function network element. Specifically, the processor 901 is configured to perform S502 in the communication method 100, perform S603 in the communication method 200, and perform S701 in the communication method 300. The transceiver 905 is configured to perform S501, S503, and S504 in the communication method 100, perform S601, S602, S604, S605, and S606 in the communication method 200, and perform S702, S703, S704, and S706 in the communication method 300.

In another possible design, the communication apparatus 900 may be used in the first sensing device. Specifically, the processor 901 is configured to perform S705 in the communication method 300. The transceiver 905 is configured to perform S503 and S504 in the communication method 100, perform S604 and S605 in the communication method 200, and perform S702, S704, and S706 in the communication method 300.

Optionally, the processor 901 may store instructions 903. The instruction 903 are run on the processor 901, to cause the communication apparatus 900 to perform the methods described in the foregoing method embodiments. The instructions 903 may be built into the processor 901. In this case, the processor 901 may be implemented by using hardware.

This embodiment of this application and the method embodiments shown in the communication method 100 to the communication method 300 are based on a same concept, and bring same technical effects. For a specific principle, refer to the descriptions in the embodiments shown in the communication method 100 to the communication method 300. Details are not described again.

An embodiment of this application further provides a communication system. The system may include a sensing function network element and a first sensing device. Optionally, the system further includes a second sensing device. In another possible design, the system may further include another device/function network element that interacts with the sensing function network element, the first sensing device, and the second sensing device.

An embodiment of this application further provides a computer-readable storage medium, configured to store computer software instructions. When the instructions are executed by a communication apparatus, a function in any one of the foregoing method embodiments is implemented.

An embodiment of this application further provides a computer program product, configured to store computer software instructions. When the instructions are executed by a communication apparatus, a function in any one of the foregoing method embodiments is implemented.

An embodiment of this application further provides a computer program. When the computer program is run on a computer, a function in any one of the foregoing method embodiments is implemented.

The terms "first", "second", and the like in the specification, claims, and accompanying drawings of embodiments of this application are used to distinguish between different objects, but are not used to describe a specific order. "First", "second", and the like are merely intended for a purpose of description, and shall not be understood as an indication or implication of relative importance or an implicit indication of a quantity of indicated technical features. Therefore, a feature limited by "first", "second", or the like may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, processes, methods, systems, products, or devices that include a series of steps or units are not limited to the listed steps or units, but optionally further includes an unlisted step or unit, or optionally further includes other inherent steps or units of these processes, methods, products, or devices.

An "embodiment" mentioned in embodiments of this application means that a particular feature, structure, or characteristic described with reference to this embodiment may be included in at least one embodiment of this application. The phrase shown in various locations in the specification may not necessarily refer to a same embodiment, and is not an independent or alternative embodiment exclusive from another embodiment. It is explicitly and implicitly understood by a person skilled in the art that embodiments described in the specification may be combined with another embodiment.

In embodiments of this application, "at least one (item)" means one or more, "a plurality of" means two or more, and "and/or" is used to describe an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including a singular item (piece) or any combination of plural items (pieces). For example, at least one (piece) of a, b, or c may indicate a, b, c, a and b, a and c, b and c, or a, b, and c, where a, b, and c may be singular or plural.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or some of the foregoing embodiments may be implemented by using software, hardware, firmware, or any combination thereof. When the software is used for implementation, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a sensing function network element, and the method comprises:
determining a sensing data type based on sensing information, wherein the sensing information comprises at least one of the following: a sensing service type, a sensing principle, a sensing performance indicator requirement, a data fusion effect indicator requirement, a security and privacy requirement, an operator policy, a sensing mode, a sensing device type, a sensing data type supported by a sensing device, or a processing capability of a service requester;
sending, to a first sensing device, information indicating the sensing data type; and
receiving sensing data of the sensing data type from the first sensing device.

2. The method according to claim 1, wherein the determining the sensing data type based on the sensing information comprises:
determining, based on the sensing information and authorization information of the service requester, a first type of a sensing result exposed to the service requester, wherein the authorization information of the service requester comprises a sensing result type authorized to the service requester; or
determining, based on the sensing information, a first type of a sensing result exposed to the service requester; and
determining the sensing data type based on the first type of the sensing result.

3. The method according to claim 2, wherein the method further comprises:
sending, to the service requester, information indicating the first type of the sensing result.

4. The method according to claim 3, wherein the method further comprises:
receiving, from the service requester, information indicating a second type of a sensing result, wherein the second type of the sensing result indicates a sensing result requested by the service requester; and
the sending, to the service requester, the information indicating the first type of the sensing result comprises:
when the second type of the sensing result is different from the first type of the sensing result, sending, to the service requester, the information indicating the first type of the sensing result.

5. The method according to any one of claims 1 to 4, wherein the method further comprises:
determining the sensing principle based on the sensing service type and the sensing performance indicator requirement, wherein the sensing principle is a radar sensing principle or a non-radar sensing principle; and
sending, to the first sensing device and/or a second sensing device, information indicating the sensing principle, wherein
the radar sensing principle is obtaining object characteristic information or event characteristic information by processing an object-reflected signal received by a receiver; and
the non-radar sensing principle is: obtaining the object characteristic information or the event characteristic information by measuring a change of radio channel state information; or obtaining the object characteristic information or the event characteristic information by using a camera; or obtaining the object characteristic information or the event characteristic information by using an ultrasonic wave; or obtaining the object characteristic information or the event characteristic information through thermal imaging.

6. The method according to any one of claims 1 to 5, wherein the method further comprises:
sending, to the second sensing device, information indicating an intermediate data type, wherein the intermediate data type is used by the second sensing device to determine intermediate data to be sent to the first sensing device, and the intermediate data is used by the first sensing device to obtain the sensing data.

7. The method according to any one of claims 1 to 6, wherein the sensing data type is one of raw data, spectrum information, point cloud information, non-point cloud information, and a sensing result; and
the raw data, the spectrum information, the point cloud information, and the sensing result are obtained when the first sensing device or the second sensing device performs sensing by using the radar sensing principle, and the non-point cloud information is obtained when the first sensing device or the second sensing device performs sensing by using the non-radar sensing principle.

8. The method according to any one of claims 1 to 7, wherein the sending, to the first sensing device, the information indicating the sensing data type comprises:
receiving a sensing service request from the service requester; and
sending, to the first sensing device based on the sensing service request, the information indicating the sensing data type.

9. The method according to claim 8, wherein the sending, to the first sensing device based on the sensing service request, the information indicating the sensing data type comprises:
determining the first sensing device based on a sensing area in the sensing service request; and
sending, to the first sensing device, the information indicating the sensing data type.

10. The method according to claim 9, wherein the determining the first sensing device based on the sensing area in the sensing service request comprises:
determining one or more sensing devices based on the sensing area in the sensing service request; and
determining the first sensing device based on a sensing data type supported by the one or more sensing devices, wherein the first sensing device supports the sensing data type.

11. A communication method, wherein the method is applied to a first sensing device, and the method comprises:
receiving, from a sensing function network element, information indicating a sensing data type, wherein the sensing data type is determined based on sensing information, and the sensing information comprises at least one of the following: a sensing service type, a sensing principle, a sensing performance indicator requirement, a data fusion effect indicator requirement, a security and privacy requirement, an operator policy, a sensing mode, a sensing device type, a sensing data type supported by a sensing device, or a processing capability of a service requester; and
sending sensing data of the sensing data type to the sensing function network element.

12. The method according to claim 11, wherein before the sending the sensing data of the sensing data type to the sensing function network element, the method further comprises:
receiving, from the sensing function network element, information indicating the sensing principle, wherein the sensing principle is a radar sensing principle or a non-radar sensing principle, and the sensing principle is determined based on the sensing service type and the sensing performance indicator requirement; and
performing a sensing service based on the sensing principle, to obtain the sensing data of the sensing data type, wherein
the radar sensing principle is obtaining object characteristic information or event characteristic information by processing an object-reflected signal received by a receiver; and
the non-radar sensing principle is: obtaining the object characteristic information or the event characteristic information by measuring a change of radio channel state information; or obtaining the object characteristic information or the event characteristic information by using a camera; or obtaining the object characteristic information or the event characteristic information by using an ultrasonic wave; or obtaining the object characteristic information or the event characteristic information through thermal imaging.

13. The method according to claim 11 or 12, wherein before the sending the sensing data of the sensing data type to the sensing function network element, the method further comprises:
receiving intermediate data of an intermediate data type from a second sensing device; and
obtaining the sensing data of the sensing data type based on the intermediate data.

14. The method according to any one of claims 11 to 13, wherein the sensing data type is one of raw data, spectrum information, point cloud information, non-point cloud information, and a sensing result; and
the raw data, the spectrum information, the point cloud information, and the sensing result are obtained when the first sensing device or the second sensing device performs sensing by using the radar sensing principle, and the non-point cloud information is obtained when the first sensing device or the second sensing device performs sensing by using the non-radar sensing principle.

15. A communication method, wherein the method is applied to a sensing function network element, and the method comprises:
obtaining one or more sensing data types supported by a first sensing device;
sending a first indication to the first sensing device, wherein the first indication indicates a first sensing data type determined from the one or more sensing data types;
receiving a sensing service request of a first sensing service from a service requester;
sending sensing control information to the first sensing device based on the sensing service request, wherein the sensing control information is used to request the first sensing device to perform the first sensing service; and
receiving sensing data of the first sensing data type from the first sensing device, wherein the sensing data is obtained by the first sensing device by performing the first sensing service.

16. The method according to claim 15, wherein the sending the sensing control information to the first sensing device based on the sensing service request comprises:
determining the first sensing device based on a sensing area in the sensing service request; and
sending the sensing control information to the first sensing device.

17. The method according to claim 16, wherein the determining the first sensing device based on the sensing area in the sensing service request comprises:
determining one or more sensing devices based on the sensing area in the sensing service request; and
determining the first sensing device based on a sensing data type supported by the one or more sensing devices, wherein the first sensing data type supported by the first sensing device supports the first sensing service.

18. The method according to claim 15 or 17, wherein that the first sensing data type supports the first sensing service comprises:
the first sensing data type satisfies a sensing data type and/or a sensing result type of the first sensing service; and
the sensing data type and/or the sensing result type of the first sensing service are/is carried in the sensing service request, or the sensing data type and/or the sensing result type of the first sensing service are/is determined based on sensing information in the sensing service request and/or authorization information of the service requester.

19. The method according to claim 18, wherein
the sensing information comprises at least one of the following: a sensing service type, a sensing principle, a sensing performance indicator requirement, a data fusion effect indicator requirement, a security and privacy requirement, an operator policy, a sensing mode, a sensing device type, a sensing data type supported by a sensing device, or a processing capability of the service requester; and
the authorization information of the service requester comprises a sensing result type authorized to the service requester.

20. The method according to any one of claims 15 to 19, wherein the method further comprises:
sending, to the service requester, information indicating the sensing result type of the first sensing service.

21. The method according to claim 20, wherein the method further comprises:
receiving a sensing result type from the service requester, wherein the sensing result type of the service requester indicates a sensing result requested by the service requester; and
the sending, to the service requester, the information indicating the sensing result type of the first sensing service comprises:
when the sensing result type of the service requester is different from the sensing result type of the first sensing service, sending, to the service requester, the information indicating the sensing result type of the first sensing service.

22. The method according to any one of claims 15 to 20, wherein the method further comprises:
obtaining one or more sensing principles supported by the first sensing device; and
sending a second indication to the first sensing device, wherein the second indication indicates a first sensing principle determined from the one or more sensing principles.

23. The method according to any one of claims 15 to 22, wherein
the first sensing data type is one of raw data, spectrum information, point cloud information, non-point cloud information, and a sensing result; and
the raw data, the spectrum information, the point cloud information, and the sensing result are obtained when the first sensing device or the second sensing device performs sensing by using the radar sensing principle, and the non-point cloud information is obtained when the first sensing device or the second sensing device performs sensing by using the non-radar sensing principle.

24. A communication method, wherein the method is applied to a first sensing device, and the method comprises:
receiving a first indication from a sensing function network element, wherein the first indication indicates a first sensing data type, and the first sensing data type is one of one or more sensing data types supported by the first sensing device;
receiving sensing control information from the sensing function network element, wherein the sensing control information is used to request the first sensing device to perform a first sensing service; and
sending sensing data of the first sensing data type to the sensing function network element, wherein the sensing data is obtained by the first sensing device by performing the first sensing service.

25. The method according to claim 24, wherein the first sensing data type supported by the first sensing device supports the first sensing service.

26. The method according to claim 25, wherein that the first sensing data type supports the first sensing service comprises:
the first sensing data type satisfies a sensing data type and/or a sensing result type of the first sensing service.

27. The method according to any one of claims 24 to 26, wherein the method further comprises:
receiving a second indication from the sensing function network element, wherein the second indication indicates a first sensing principle, and the first sensing principle is one of one or more sensing principles supported by the first sensing device.

28. The method according to any one of claims 24 to 27, wherein
the first sensing data type is one of raw data, spectrum information, point cloud information, non-point cloud information, and a sensing result; and
the raw data, the spectrum information, the point cloud information, and the sensing result are obtained when the first sensing device or the second sensing device performs sensing by using the radar sensing principle, and the non-point cloud information is obtained when the first sensing device or the second sensing device performs sensing by using the non-radar sensing principle.

29. A communication apparatus, wherein the communication apparatus comprises a module configured to perform the method according to any one of claims 1 to 10, or comprises a module configured to perform the method according to any one of claims 11 to 14, or comprises a module configured to perform the method according to any one of claims 15 to 23, or comprises a module configured to perform the method according to any one of claims 24 to 28.

30. A communication apparatus, wherein the communication apparatus comprises a processor, and the processor is configured to perform the method according to any one of claims 1 to 10, or is configured to perform the method according to any one of claims 11 to 14, or is configured to perform the method according to any one of claims 15 to 23, or is configured to perform the method according to any one of claims 24 to 28.

31. A communication system, comprising an apparatus configured to perform the method according to any one of claims 1 to 10 and an apparatus configured to perform the method according to any one of claims 11 to 14.

32. A communication system, comprising an apparatus configured to perform the method according to any one of claims 15 to 23 and an apparatus configured to perform the method according to any one of claims 24 to 28.

33. A computer-readable storage medium, wherein the computer-readable storage medium is configured to store instructions, and when the instructions are run on a computer, the method according to any one of claims 1 to 10 is performed, or the method according to any one of claims 11 to 14 is performed, or the method according to any one of claims 15 to 23 is performed, or the method according to any one of claims 24 to 28 is performed.
